# EUROPÄISCHE PATENTSCHRIFT

(11) **EP 0 924 727 B1**
(45) Veröffentlichungstag und Bekanntmachung des Hinweises auf die Patenterteilung: **08.08.2001**
(21) Anmeldenummer: 99103390.3
(22) Anmeldetag: 28.02.1996
(51) Int. Cl.: H01H 31/12, H01H 9/36, H01H 85/20

(54) **Sicherungs-Lastschaltgerät und/oder -Trennschaltgerät**
Fuse-switch and/or fuse disconnector
Fusible-interrupteur et/ou fusible-sectionneur

(43) Veröffentlichungstag der Anmeldung: 23.06.1999
(62) Teilanmeldung aus: 96905813.0
(73) Patentinhaber: Wermelinger AG, 6017 Ruswil (CH)
(72) Erfinder: Wermelinger, Anton c/o Wermelinger AG, 6017 Ruswil (CH)
(74) Vertreter: Lippich, Wolfgang, Dipl.-Pys., Dr.rer.nat.

(56) Entgegenhaltungen:
- DE-A- 3 622 833
- DE-A- 4 430 046
- DE-B- 1 076 775
- DE-B- 1 166 876
- DE-U- 1 694 534
- FR-A- 2 625 032
- GB-A- 954 900

## Beschreibung

Die Erfindung betrifft ein Sicherungs-Lastschaltgerät und/ oder -Trennschaltgerät gemäß dem Oberbegriff von Anspruch 1. Bei einem solchen Gerät dient ein Sicherungseinsatz zugleich als bewegbares Schaltstück zum Öffnen und Schließen eines Stromkreises.

Aus der DE-U-1 694 534, nach welcher der Oberbegriff des Anspruchs 1 gebildet wurde, ist ein Sicherungs-Lastschaltgerät bekannt, welches zum Ausschalten unter Last mit einem Federspeicher ausgerüstet ist. Dieser bedingt, daß die Ausschaltbewegung unabhängig von der Art der Betätigung mit einer hohen, definierten Geschwindigkeit erfolgt. Das Federelement ist an der Frontseite des Schaltgeräts angeordnet.

Aus der DE-A-1 166 876 ist ein Sicherungstrennschalter mit einer Löschblechanordnung bekannt, bei der das dem sog. Festkontakt am nächsten liegende Löschblech mit diesem leitend verbunden ist. Eine derartige leitende Verbindung verbessert das Löschverhalten der Löschblechanordnung. Die leitende Verbindung zwischen dem genannten Löschblech und dem Festkontakt ist lösbar ausgebildet. Dies dient offenbar dazu, eine leichte Demontage der Löschblechanordnung zu erlauben.

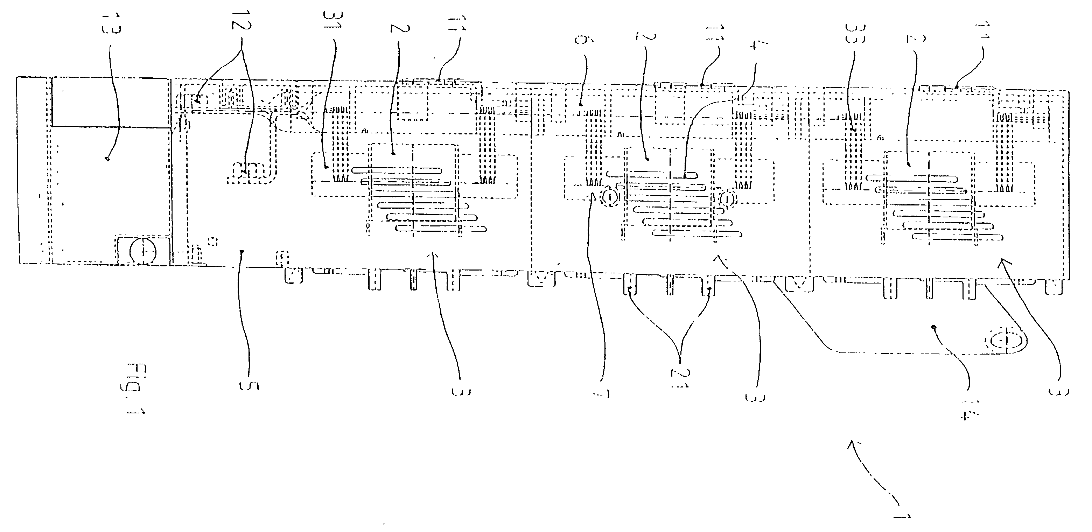

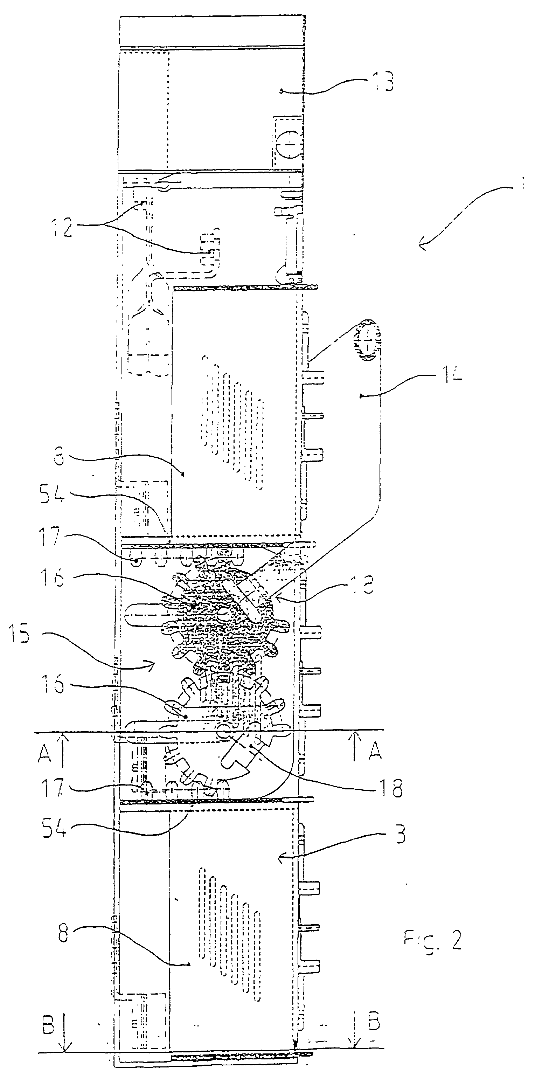

Aus der DE-A-36 22 833 ist ein Kontaktkörper zur Aufnahme eines Kontaktmessers einer sog. NH-Sicherung bekannt. Bei bestimmten, dort gezeigten Ausführungsformen (Fig. 1 und 2) weisen die beiden Schenkel des Kontaktkörpers jeweils einen L-förmigen Schlitz auf. Die beiden Schlitze teilen die Schenkel jeweils in zwei unabhängig federnde Kontaktlaschen, deren Form und Anordnung - von der Seite gesehenübereinstimmt. Diese Ausbildung mit insgesamt vier unabhängig federnden Kontaktlaschen dient der Vergrößerung der Anzahl der Kontaktpunkte und damit der Kontaktverbesserung.

Aus der DE-A-1 076 775 ist ein Sicherungstrennschalter mit einem Getriebe bekannt, welches durch eine Ritzel-Zahnstangen-Anordnung gebildet wird. Das Ritzel dieser Anordnung ist mit einem Bedienhebel gekoppelt, und kämmt mit der Zahnstange. Durch eine von dem Bedienhebel bewirkte Drehung gegenüber der Zahnstange ruft es eine Parallelverschiebung des Sicherungseinsatzes hervor.

Aus der GB-A-954 900 ist ferner ein Sicherungs-Lastschaltgerät mit einem Getriebe bekannt, welches abtriebsseitig an einen Sicherungshalter und antriebsseitig an einen Bedienhebel gekoppelt ist. Das Getriebe wird durch zwei gegenläufige Zahnräder gebildet, welche über Arme mit Stiften so zusammenwirken, daß der Sicherungshalter im wesentlichen eine Paralleltranslation des Sicherungseinsatzes ausführt.

Der Erfindung liegt die Aufgabe zugrunde, ein vorteilhaft weitergebildetes Sicherungs-Schaltgerät bereitzustellen.

Diese Aufgabe wird gemäß Anspruch 1 durch ein Sicherungs-Lastschaltgerät und/oder -Trennschaltgerät gelöst, mit:
- einem Isolierstoffgehäuse,
- mehreren beweglichen Sicherungshaltern zum Halten je eines Sicherungseinsatzes und mehreren An-schlußräumen, die mit Kontaktmitteln ausgerüstet sind, zur Aufnahme jeweils eines Sicherungseinsatzes, wobei eine elektrische Verbindung durch Einsetzen und Herausbewegen des Sicherungseinsatzes in die/aus den Kontaktmittel/n schaltbar ist,
- wenigstens einem Antriebs-Speicher mit einer oder mehreren Federn, der zumindest einen Teil der bei einer Ausschalt-Betätigung des Schaltgeräts aufgebrachten Energie zunächst speichert und dann in einem Zug für die Auusschalt-Bewegung freigibt,
dadurch gekennzeichnet, daß
die Federn als biegebeanspruchte Druckfedern ausgebildet sind, die in Stirnseiten der Anschlußräume integriert sind.

Vorteilhafte Ausgestaltungen sind in den Unteransprüchen angegeben.

Beim Ausschalten eines elektrischen Stromes entsteht aufgrund von Selbstinduktion ein Lichtbogen zwischen den Schalterkontakten. Dieser entwickelt hohe Temperaturen, so daß das Ausschalten eines Sicherungsschaltgeräts unter Last mit einer hohen Verletzungsgefahr für das Bedienungspersonal verbunden sein kann.

Um dem zu begegnen, ist es bekannt, zum Ausschalten unter Last Schutzwerkzeuge, z.B. Betätigungshandhaben mit anmontiertem Unterarmschutz, zu verwenden. Diese können bei sachgemäßer Anwendung die Verletzungsgefahr mindern. Sie sind jedoch nur begrenzt wirksam und schließen eine unsachgemäße Bedienung oder gar eine Betätigung des Schaltgeräts ganz ohne Schutzwerkzeug nicht aus, so daß eine nicht unerhebliches Verletzungsgefahr bestehen bleibt.

Durch die Kapselung des Sicherungseinsatzes ist weitgehend ausgeschlossen, daß die Bedienungsperson mit einem Lichtbogen in Berührung kommt. Dies erschwert eine unsachgemäße Verwendung. Die Verletzungsgefahr ist so praktisch ausgeräumt. Das Sicherungs-Lastschaltgerät und/oder -Trennschaltgerät ist wahlweise ein- cder mehrpolig schaltbar.

Wenn das Schaltgerät geeignet sein soll, mehrere Phasen, insbesondere die drei Phasen eines Drehstromsystems schal-ten zu können, ist es mehrpolig ausgebildet und hat dann mehrere, insbesondere drei Anschlußräume. Vorzugsweise ist für jeden Pol ein eigener Anschlußraum vorgesehen.

In Niederspannungsanlagen für industrielle und ähnliche Anlagen bei Strömen von ca. 6 - 2000 A und darüber, und typischen Betriebsspannungen von 100 - 1000 V Wechselstrom, verwendet man im allgemeinen Sicherungseinsätze mit jeweils wenigstens zwei Kontaktstücken, in der Regel Messerkontaktstücken, und zwar insbesondere Sicherungseinsätze des NH-Systems (Niederspannungs-Hochleistungs-Sicherungssystem). Das Schaltgerät ist daher vorzugsweise für Sicherungseinsätze mit Messerkontaktstücken, insbesondere für NH-Sicherungseinsätze ausgebildet.

Grundsätzlich kann das Ausschalten durch eine Schwenkbewegung des Sicherungseinsatzes erfolgen, in deren Verlauf zunächst nur eines der beiden Messerkontaktstücke aus seiner Kontaktklemme gezogen wird, es also zumindest anfangs nur zu einer Einfach-Unterbrechung des Stromkreises kommt (der zweite Messerkontakt kann entweder in seiner Kontaktklemme verbleiben (Einfach-Unterbrechung) oder, alternativ, zeitlich später aus seiner Kontaktklemme gezogen werden (zeitlich versetzte Zweifach-Unterbrechung). Vorzugsweise ist das Schaltgerät derart ausgebildet, daß bei der Ausschaltbewegung eine zeitlich zumindest nicht wesentlich versetzte Zweifach-Unterbrechung des Stromkreises stattfindet. Dies dient dazu, zwecks weiteret Herabsetzung der Verletzungsgefahr und auch der Gefahraten Beschädigungen des Schaltgeräts durch Lichtbögen zu einem möglichst schnellen Erlöschen eines Lichtbogens beizuzragen (bzw. zu einem Nicht-Wiederzünden bei Wechselstrom, wo der Lichtbogen bei jedem Nulldurchgang erlischt). Denn um die Zweifach-Unterbrechung zu überspringen, müssen sich zwei in Reihe geschaltete Lichtbögen ausbilden, deren gesamte Lichtbogenspannung ungefähr das Zweifache derjenigen einer Einfach-Unterbrechung beträgt. Dies bedingt ein schnelleres Erlöschen. Am wirksamsten ist diese Maßnahme, wenn die Unterbrechung an beiden Sicherungskontakten praktisch gleichzeitig stattfindet.

Dies wird vorteilhaft erzielt durch eine Parallelführung des Sicherungseinsatzes bei der Ausschaltbewegung, d.h. eine Bewegung derart, daß der Sicherungseinsatz parallel zu seiner Lage im kontaktierten Zustand bleibt (etwa im Gegensatz zu der o.g. Schwenkbewegung).

Um die Möglichkeit eines Austretens eines Lichtbogens aus dem Anschlußraum auszuschließen, ist das Schaltgerät vorteilhaft so ausgerüstet, daß der Anschlußraum im wesentlichen geschlossen ist (abgesehen z.B. von Belüftungsöffnungen) , und zwar sowohl in der Schließstellung als auch in der Offenstellung (und allen Zwischenstellungen) des Sicherungseinsatzes.

Für eine Handbetätigung weist das Schaltgerät vorzugsweise einen für die Ausführung der Schaltbewegung vorgesehenen Bedienhebel auf. Eine besonders gute Handhabbarkeit ist dann gegeben, wenn der Bedienhebel in der Schließstellung nach oben weist und für eine Ausschaltbetätigung zur Bedienungsperson hin nach unten schwenkbar ist, denn diese Anordnung erlaubt ein besonders schnelles öffnen bei relativ geringem Krafteinsatz.

Zur Umsetzung der Bewegung einer vor. einer Bedienungsperson betätigbaren Einrichtung (bei der es sich vorzugsweise um den Bedienhebel handelt) in eine Schaltbewegung des Sicherungseinsatzes ist das Schaltgerät vorzugsweise mit einem Getriebe ausgerüstet, das antriebsseitig an die betätigbare Einrichtung (bzw. den Bedienhebel) und abtriebseitigdirekt oder indirekt - an den Sicherungshalter gekoppelt ist.

Einerseits fordert man im allgemeinen von einem Schaltgerät, daß das Ein- und Ausschalten in einer bestimmten, einheitlich festgelegten Richtung möglich sein soll (z.B. soll - wie oben erwähnt - ein Ausschalten durch Schwenken des Bedienhebels von oben nach unten möglich sein). Andererseits ist es wünschenswert, das Schaltgerät wahlweise in verschiedenen Stellungen montieren zu können (z.B. um es wahlweise an oben oder unten verlaufende Stromzuführungsleitungen anschließen zu können, was einer Drehung um 180° entspricht). Um beiden Anforderungen zu genügen, ist der Bedienhebel vorzugsweise an zwei gegenläufig wirkende Antriebselemente des Getriebes wahlweise ankoppelbar. Wenn man zum Beispiel ein Schaltgerät mit einer Ausschaltbetätigungsweise "Schwenken von oben nach unten" um 180° gedreht montiert, erlaubt diese Maßnahme, die ursprüngliche Betätigungsweise einfach durch Abkoppeln des Bedienhebels von seinem ursprünglichen Antriebselement und Ankoppeln an das gegenläufig wirkende wiederherzustellen.

Insbesondere wenn das Schaltgerät eine längliche Form hat (z.B. um als "Schaltleiste" neben anderen an einer Schaltwand montiert werden zu können), kann die Gefahr bestehen, daß der (die) Sicherungshalter oder ein diese(n) tragendes Teil bei der Schaltbewegung im Isolierstoffgehäuse verkantet (verkanten). Um dies auszuschließen, greift vorteilhaft das Getriebe abtriebsseitig an wenigstens zwei in Längsrichtung des Schaltgerätes beabstandeten Orten an dem (den) Sicherungshalter(n) oder an wenigstens einem diese(n) tragenden Teil an. Vorzugsweise ist das Getriebe abtriebsseitig für geradlinige Bewegungen ausgelegt. Die Sicherungseinsätze werden so in einer geradlinigen Translationsbewegung, insbesondere in Parallelführung, von den Kontaktmitteln entfernt (im Gegensatz etwa zu einer Schwenkbewegung).

Bevorzugt realisiert man das an zwei beabstandeten Orten angreifende Getriebe durch ein solches, das zwei in der Längsrichtung beabstandete Ritzel-Zahnstangen-Triebe umfaßt. Ein derartiges Getriebe setzt auf besonders einfache Weise eine antriebsseitige Schwenkbewegung in eine abtriebsseitige geradlinige Bewegung unter Ausschluß eines Verkantens um. Auch erlaubt es die oben erwähnte wahlweise Ankoppelbarkeit des Bedienhebels besonders einfach zu realisieren, indem der Bedienhebel durch eine lösbare Verbindung wahlweise an gegenläufigen Ritzeln des Ritzel-Zahnstangen-Triebs befestigbar. Vorzugsweise ist die lösbare Verbindung eine elastische Rastverbindung. Will man das Schaltgerät (wie in dem obigen Beispiel) um 180° gedreht montieren, so kann man den Bedienhebel ohne Werkzeug von einem Ritzel oder einem Paar von gleichläufigen Ritzeln lösen und an dem gegenläufigen Ritzel bzw. Ritzelpaar elastisch einrasten.

Beim Schalten eines mehrphasigen Stromkreises kann es für bestimmte Anwendungen erwünscht sein, alle Phasen gemeinsam zu schalten (z.B. in der Industrie zum Ein- und Ausschalten eines Drehstrommotors). Für andere Anwendungen kann es hingegen notwendig sein, einzelne Phasen auszuschalten, ohne daß hiervon die anderen Phasen betroffen werden (z.B. in einem Energieversorgungsbetrieb). Um ein und dasselbe Schaltgerät für diese verschiedenen Anwendungen einsetzen zu können, ist es vorzugsweise mit Mitteln zum wahlweisen An- oder Abkoppeln der Sicherungshalter untereinander ausgestattet, derart, daß nur ein, mehrere oder alle Sicherungshalter gemeinsam eine Schaltbewegung ausführen. Je nachdem, ob ein, mehrere oder alle Sicherungshalter eine Ausschaltbewegung ausführen sollen, wählt man vor einer Ausschaltbetätigung eine entsprechende Kopplung der Sicherungshalter. Will man beispielsweise bei einem Schaltgerät mit Phasen 1-3 nur Phase 1 ausschalten, so koppelt man vor dem Betätigen Sicherungshalter 2 und 3 von Sicherungshalter 1 ab. Will man z.B. Phasen 1 und 3 ausschalten, so koppelt man Sicherungshalter 1 mit Sicherungshalter 3 und koppelt diese von Sicherungshalter 2 ab. Will man z.B. alle drei Phasen ausschalten, koppelt man alle drei Sicherungshalter aneinander. Besonders vorzugsweise koppelt man die Sicherungshalter nicht direkt aneinander, sondern indirekt über ein diese tragendes Teil, das wiederum mit einem einzigen Betätigungsmechanismus, z.B. dem oben genannten Getriebe, gekoppelt sein kann. Dadurch kann man mit einem einzigen Betätigungsmechanismus wahlweise eine, mehrere oder alle Phasen schalten.

In Notfällen kann es erforderlich sein, daß bestimmte Phasen (in der Regel alle Phasen) schnellstens ausschaltbar sind. Ausreichend Zeit, um erst die entsprechende Kopplung der Sicherungshalter einzustellen, bleibt dann natürlich nicht. Vorzugsweise sind daher die An- und Abkoppel-Mittel so ausgebildet, daß eine eingestellte Kopplung während oder nach Ausführung eines Schaltspiels automatisch durch eine Standardkopplung ersetzt wird. Die Standard-kopplung ist insbesondere derart, daß beim nächsten Schal-ten alle Sicherungsschalter die Schaltbewegung gemeinsam ausführen. Mit "Schaltspiel" ist eine vollständige Aus- und Einschaltbetätigung gemeint. Für die nächste Ausschaltbetätigung ist das Schaltgerät dann immer im Zustand der Standardkopplung bereit. Ist eine andere Kopplung erwünscht, muß diese jedes Mal aktiv aufs Neue eingestellt werden.

Besonders einfach können die An- und Abkoppelmittel durch Rastmittel realisiert werden. Genauer weisen die An- und Abkoppelmittel zwischen einer ersten und einer zweiten Raststellung bewegbare Rastmittel auf, derart, daß ein Sicherungshalter in der ersten Raststellung der Rastmittel die Schaltbewegung ausführt, nicht hingegen in der zweiten Raststellung. Will man eine bestimmte Kopplung voreinstellen, so bringt man, z.B. von Hand, die entsprechenden Rastmittel vor der Ausschaltbetätigung in die entsprechende Raststellung. Bei der oben erwähnten automatischen Rücksetzung in die Standardkopplung erfolgt während oder nach Ausführung des Schaltspiels automatisch eine Rücksetzung der Rastmittel in die der Standardkopplung entsprechenden Raststellungen.

Für eine optimale Lichtbogenlöschung sollte die Ausschaltbewegung nach der Kontakttrennung mit einer ganz bestimmten Geschwindigkeit erfolgen. Ist die Geschwindigkeit nämlich klein, bleiben die Schalterkontakte nach der Trennung noch relativ lange nahe beieinander, was günstig für den Bestand des Lichtbogens ist. Eine große Geschwindigkeit führt hingegen wegen der dann abrupteren Stromunterbrechung zu höheren Selbstinduktionsspannungen, was wiederum günstig für den Lichtbogen ist. Das Optimum liegt dazwischen. Bei einer sog. abhängigen Handbetätigung, bei der die Schaltgeschwindigkeit allein von der Bedienungsperson definiert wird, kann man das Optimum kaum treffen. Um dem zu begegnen, ist (sind) für den (die) Sicherungseinsatz (-einsätze) jeweils ein Antriebs-Speicher, insbesondere eine Feder vorgesehen, der zumindest einen Teil der beim Betätigen des Schaltgeräts aufgebrachten Energie zunächst speichert und dann in einem Zug für die Schaltbewegung freigibt. Bei einer entsprechenden konstruktiven Auslegung des Antriebs-Speichers kann man dadurch eine für die Lichtbogenlöschung optimale Schaltgeschwindigkeit sicherstellen, weitgehend unabhängig von der Betätigungsgeschwindigkeit.

Bei einem mehrphasigen Strom bewirkt eine Unterbrechung einer Phase Selbstinduktions-Spannungsspitzen, jeweils bezogen auf die anderen Phasen. Bei einer gleichzeitigen Unterbrechung aller Phasen addieren sich deren Spannungsspitzen zu einem relativ hohen Gesamtwert, was einer schnellen Lichtbogenlöschung entgegenwirkt. Um dem zu begegnen, bildet man das Schaltgerät vorzugsweise so aus, daß bei einer Ausschaltbetätigung die Kontakttrennung für mehrere oder alle Pole (bzw. Phasen) zeitlich versetzt erfolgt.

Für manche Anwendungen werden Schaltgeräte bei weit höheren Strömen als 2000 A betrieben. Beispielsweise wird von NH-Sicherungs-Lastschaltgeräten unter Testbedingungen verlangt, Ströme von 50 000 A einschalten zu können. Verwendet man als Kontaktmittel bekannte elastische Kontaktklemmen mit gegenüberliegenden Klemmteilen, zwischen die das Kontaktmesser am Sicherungseinsatz unter elastischer Spreizung der Klemmteile eingeführt wird, so fließen bei der Einschaltbewegung bereits vor dem Einführen - bei der ersten Berührung des Kontaktmessers mit dem äußeren Bereich der Kontaktklemme - durch beide Klemmteile sehr hohe Ströme (z.B. jeweils 25 000 A). Die Ströme durch beide Klemmteile (sog. Teilströme) fließen in gleicher Richtung, so daß es aufgrund der Lorentz-Kraft zu einer mechanischen Kraftwirkung kommt, welche die Kontaktklemme zusammenzudrücken sucht. Diese Kraft kann - aufgrund der sehr hohen Teilströme - so groß sein, daß sich die Klemmteile zueinanderhin verbiegen oder gar verformen, so daß ein weiteres Einführen des Kontaktmessers in den inneren Bereich der Kontaktklemme nicht möglich ist. Diese sperrt also, ein (vollständiges) Einschalten ist nicht möglich.

Zur Lösung dieses Problems war es bereits bekannt, die Klemmteile am äußeren Ende mit Distanzstücken aus Isolierstoff auszurüsten. Beim Einführen des Kontaktmessers spreizt dieses die Distanzstücke und damit die Klemmteile auseinander, ohne elektrischen Kontakt herzustellen. Erst wenn das Kontaktmesser die Distanzstücke passiert hat, also praktisch vollständig in die Kontaktklemme eingeführt ist, können sich die Klemmteile an das Kontaktmesser anlegen und den elektrischen Kontakt herstellen. Diese Lösung funktioniert zwar, ist aber wegen der nötigen Ausrüstung mit Distanzstücken relativ aufwendig.

Die folgende Ausgestaltung der Erfindung geht einen anderen Weg: Sie nützt aus, daß Ströme in entgegengesetzten Richtungen eine abstoßende (Lorentz-)Kraftwirkung verursachen.

Und zwar ist bei ihr die oben genannte Kontaktklemme mit gegenüberliegenden Klemmteilen so ausgebildet, daß bei der Einführbewegung des Kontaktmessers zumindest anfangs die Teilströme in den gegenüberliegenden Klemmteilen wenigstens teilweise in einander entgegengesetzten Richtungen fließen. Dies erzeugt eine die Klemmteile auseinanderdrückende Kraftkomponente, welche das oben genannte Sperren der Kontaktklemme beim Einschalten ausschließt.

Im Stand der Technik ist es bei Schaltern bekannt, durch Leiterüberkreuzungen und ähnliche Maßnahmen die abstoßende Kraftwirkung zu kompensieren, die zwischen Kontaktteilen zu beiden Seiten einer Trennstelle (was hier bedeuten würde: zwischen Kontaktmesser und Kontaktklemme) auftritt. Hierdurch soll eine unerwünschte Kontakttrennung vermieden werden. Beispiele geben die Veröffentlichungen DE-U-1 727 259 (BBC), DE-A-2 429 983 (SIEMENS), DE-A-1 186 130 (MER-LIN), DE-A-1 905 086 (SIEMENS) und DE-A-1 085 046 (BBC). Bei der vorliegenden Ausgestaltung der Erfindung geht es aber um etwas gänzlich anderes: Es soll - wie gesagt - eine durch Teilströme bedingte anziehende Kraftwirkung innerhalb eines auf einer Seite der Trennstelle befindlichen Doppelteils (nämlich der Kontaktklemme) verringert werden, um ein Sperren des Kontakts beim Einschalten zu vermeiden. Hierfür gibt dieser Stand der Technik keine Anregung.

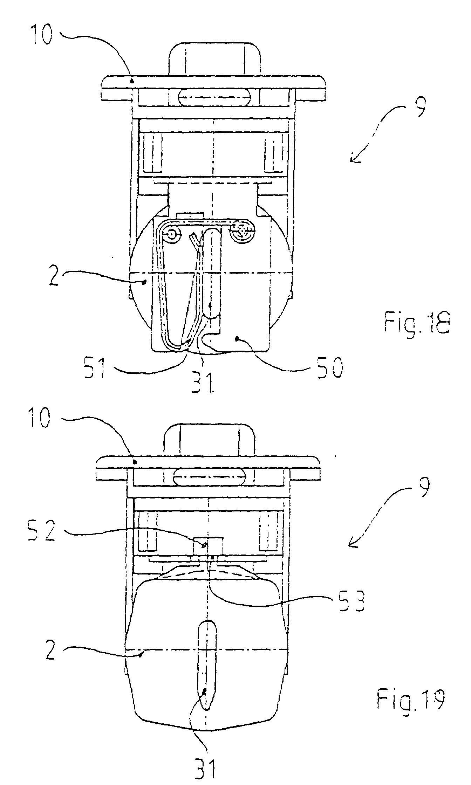

Herstellungstechnisch besonders einfach ist eine Ausgestaltung, bei welcher der wenigstens in Teilbereichen entgegengesetzte Stromfluß durch unterschiedliche Schlitzung der gegenüberliegenden Klemmteile erzielt wird. Vorzugsweise ist die Kontaktklemme als (insbesondere einstückiges) Biege-Stanz-Teil ausgeführt. Dessen Herstellungskosten entsprechen einer herkömmlichen geschlitzten Kontaktklemme ohne irgendeine Ausrüstung zum Vermeiden eines Sperrens beim Einschalten, wie sie beispielsweise in Fig. 8 und Fig. 16 (Bezugszahl 233) gezeigt ist.

Vorteilhaft werden die Klemmteile jeweils durch wenigstens zwei (insbesondere parallel zur Schaltrichtung orientierte) Klemmteil-Abschnitte und wenigstens ein (insbesondere senkrecht dazu, also quer zur Schaltrichtung orientiertes) Querstück gebildet. Die Querstücke der verschiedenen Klemmteile sind nicht etwa mit den gleichen, sondern mit gegeneinander versetzten Klemmteil-Abschnitten verbunden (bezogen auf das jeweils gegenüberliegende Klemmteil). Durch diese Maßnahme fließen die Teilströme in den gegenüberliegenden Querstücken in entgegengesetzten Richtungen, in den anschließenden (gegeneinander versetzten) Klemmteil-Abschnitten fließen sie hingegen in gleicher Richtung. Die Querstücke liegen vorzugsweise am äußeren Ende der Kontaktklemme, so beim Einschalten das Kontaktmesser zunächst mit ihnen Kontakt herstellt.

Weitere Ausgestaltungen der Kontaktmittel, die mit den obigen kombinierbar sind, betreffen die Erzielung eines besonders niedrigen Übergangswiderstandes. Im Stand der Technik versucht man einen niedrigen Übergangswiderstand durch eine flächige Ausbildung der Sicherungskontakte zu erzielen. Beispielsweise ist bei Messerkontaktsicherungen das Gegenstück zum Kontaktmesser häufig als im Querschnitt U-förmige, flächige Kontaktklemme ohne Schlitzung ausgebildet. Tatsächlich gelingt aber mit dieser flächigen Ausbildung gar keine Flächenauflage, sondern nur eine Einpunktauflage an jeder Seite des Kontaktmessers. Um demgegenüber einen geringeren Übergangswiderstand zu erzielen, werden die Kontaktmittel vorzugsweise durch mehrere einzeln elastisch bewegliche Punktkontaktelemente pro Anschluß gebildet, wodurch man an jedem Punktkontaktelement mindestens eine Einpunktauflage und insgesamt eine echte Mehrpunktauflage erhält. Besonders einfach realisiert man diese Maßnahme, indem jeweils zwei sich gegenüberliegende Punktkontaktelemente durch eine federnde Kontaktzange gebildet werden.

Einen vorteilhaften Aufbau der Kontaktmittel und auch der stromzuführenden Leiter, z.B. in Form von Leiterschienen, erhält man, indem die Kontaktzangen als Doppelkontaktzange ausgebildet sind, die mit ihrer einen Kontaktzange die Leiterschiene und mit ihrer gegenüberliegenden anderen Kontaktzange den Sicherungskontakt greift. Vorzugsweise sind in den Leiterschienen Vertiefungen für die Leiterschienen-Punktkontakte der Doppelkontaktzange ausgebildet, so daß an jedem Leiterschienen-Punktkontakt eine Zweipunktauflage realisiert wird. Die Leiterschienenkontakte haben hierdurch einen relativ zu den Sicherungskontakten kaum ins Gewicht fallenden Übergangswiderstand. Außerdem stellt der Eingriff der Doppelkontaktzange in die Vertiefungen sicher, daß sie mechanisch fester mit den Leiterschienen als mit den Sicherungskontaktmessern verbunden sind und somit nicht unerwünscht zusammen mit einem Sicherungseinsatz herausgezogen werden.

Lichtbögen sind auch deshalb so gefährlich, da sie relativ lang werden und dabei unberechenbare Formen annehmen können, so daß sie unerwartet als unerreichbar erachtete Raumgebiete erreichen können. Abgesehen von der Gefährdung des Bedienungspersonals können sie auch zur thermischen Beschädigung und Zerstörung des Schaltgeräts führen. Um dem durch Sicherstellen eines schnellen Löschens in einem definierten Raumbereich zu begegnen, ist das Schaltgerät vorzugsweise mit wenigstens einer Löschblechanordnung ausgestattet, die wenigstens einen aus dem Bereich der Schaltbewegungsbahn des Sicherungskontaktes wegführenden (d.h. nach außen führenden) Löschblechschlitz, und insbesondere mehrere übereinanderliegende Löschblechschlitze. Die Löschbleche aus ferrromagnetischem Material wie z.B. Eisen beeinflussen das Magnetfeld des Lichtbogenstroms derart, daß sich der Lichtbogen zunächst zum Löschblechschlitz hin krümmt und dann in ihn hinein gedrängt wird. Man nennt dieses Magnetfeld daher auch "selbstinduziertes magnetisches Blasfeld". Wegen der damit einhergehenden Erhöhung der Lichtbogenspannung und der im Löschblechschlitz vorliegenden starken Kühlung erlischt der Lichtbogen schnell in einem definierten Raumbereich. Mehrere übereinanderliegende Löschblechschlitze führen zu einer Aufteilung des Lichtbogens und haben eine besonders gute Kühl- und damit Löschwirkung. Da sich ein Lichtbogen unvorhersehbar auf einer oder der anderen Seite der Schaltbewegungsbahn ausbilden kann, ist die Löschblechanordnung vorteilhaft an beiden Seiten der Schaltbewegungsbahn, symmetrisch zu ihr, angeordnet.

Vorzugsweise ist das der Kontaktklemme nächstgelegene Löschblech (im folgenden auch "erstes Löschblech" genannt) mit dieser elektrisch verbunden, liegt also auf gleichem elektrischen Potential wie die Kontaktklemme. Dadurch springt ein Lichtbogen zwischen Kontaktklemme und Sicherungskontaktmesser sofort auf das erste Löschblech über oder entsteht bereits nur zwischen erstem Löschblech und Kontaktmesser. Der Bereich zwischen Kontaktklemme und erstem Löschblech, in dem die Lichtbogenkühlung deutlich geringer als im Bereich der Löschblechanordnung ist, bleibt so im wesentlichen lichtbogenfrei. Somit trägt diese Maßnahme zu einer stärkeren wirksamen Lichtbogenkühlung und damit zu einem schnelleren Löschen des Lichtbogens bei.

Vorzugsweise ist die elektrische Verbindung des ersten Löschblechs mit dem Kontaktmittel eine lösbare Verbindung. Dies kann zum einen dazu dienen, das Gehäuse des Schaltgeräts abnehmen zu können. Denn im allgemeinen sind die Löschbleche in dem Schaltgerätgehäuse integriert, wohingegen die Kontaktmittel mit den Stromzuleitungen (z.B. Leiterschienen) verbunden sind oder Teil einer die Stromzuleitungen aufnehmenden Basis des Schaltgeräts sind. Zum anderen kann dies - wie unten näher erläutert wird - dazu dienen, die Verbindung zwischen dem ersten Löschblech und dem Kontaktmittel nur zeitweise herzustellen.

Vorzugsweise ist die lösbare elektrische Verbindung in 180°-Symmetrie eingerichtet, so daß sie einen Anschluß des ersten Löschblechs auch erlaubt, wenn das Gehäuse gegenüber der die Leiterschienen aufnehmenden Basis um 180° gedreht aufgesetzt wird. Diese symmetrische Ausbildung ist insbesondere auch vorteilhaft bei Schaltgeräten, bei denen nur einem der beiden Kontaktmittel eines Anschlußraumes Löschbleche zugeordnet sind, wie es beispielsweise bei Schaltgeräten mit Schwenkbewegung des Sicherungseinsatzes (statt Paralleltranslationsbewegung) der Fall ist.

Grundsätzlich kann das erste Löschblech direkt mit der Kontaktklemme kontaktiert werden. Da der Sicherungseinsatz eine beträchtliche Wärmequelle ist und die elektrische Verbindung auch eine thermische Kopplung bewirkt, kann es so zur übermäßigen Erwärmung des Löschblechbereichs kommen. Um dies zu vermeiden, besteht eine Möglichkeit darin, das erste Löschblech nicht direkt mit der Kontaktklemme zu verbinden, sondern mit einem Leiter, der mit der Stromzuführung für die Kontaktklemme verbunden ist. Die Kontaktklemme und das erste Löschblech sind also parallel geschaltet. In Einschaltstellung fließt Strom durch die Kontaktklemme, bei brennendem Lichtbogen hingegen durch das erste Löschblech. Die Stromzuführung befindet sich auf niedrigerem Temperaturniveau als die Kontaktklemme, so daß diese Maßnahme die Erwärmung des Löschblechbereichs vermindert.

Eine andere bevorzugte Lösung besteht darin, das Schaltgerät so auszubilden, daß die lösbare elektrische Verbindung unterbrochen ist, wenn der Kontakt zwischen dem Sicherungskontaktmesser und der Kontaktklemme geschlossen ist (d.h. wenn die Sicherung eingesetzt ist), und sie erst dann zu schließen, wenn die betreffende Phase ausgeschaltet wird. Im Dauerbetrieb - wenn der Sicherungseinsatz Wärme abgibtbesteht so kein Wärmeleitungskontakt zum ersten Löschblech, so daß sich der Löschblechbereich nicht erwärmt. Erst mit der Ausschaltbewegung, wenn die Kontaktierung des ersten Löschblechs zur Lichbogenlöschung benötigt wird, kommt es zum elektrischen und zum Wärmeleitungskontakt zwischen Kontaktklemme und erstem Löschblech. Der erhitzte Sicherungseinsatz aber von diesem Zeitpunkt an nicht mehr mit der Kontaktklemme in Verbindung, so daß nur noch ein Teil der geringen Nachwärmemenge, die in der Kontaktklemme gespeichert ist, zum ersten Löschblech fließt.

Eine besonders einfache Konstruktion nützt die elastischen Eigenschaften der Kontaktklemme aus: Bei ihr greifen sowohl das Sicherungskontaktmesser als auch ein mit dem ersten Löschblech verbundenes Kontaktstück in die Kontaktklemme ein, wobei dieses Löschblechkontaktstück nur dann in Kontakt mit der Kontaktklemme kommt, wenn das Sicherungskontaktmesser ganz oder teilweise aus der Kontaktklemme herausgezogen wird. Zum Beispiel kann das Löschblechkontaktstück mittig in die Kontaktklemme ragen und etwas schmale= als das Kontaktmesser ausgebildet sein. Bei nicht eingeführtem Kontaktmesser liegen dann die elektrisch federnden Klemmstücke am Löschblechkontaktstück an und vermitteln elektrischen Kontakt. Einführen des breiteren Kontaktmessers hebt die Klemmstücke vom Löschblechkontaktstück ab, was den elektrischen und auch den Wärmeleitungskontakt unterbricht. Diese Lösung ist sehr einfach und fertigungstechnisch vorteilhaft.

Wie oben ausgeführt, wird der Lichtbogen durch Eintritt in die Löschblechschlitze gekühlt und hierdurch zum Erlöschen gebracht. Um einen möglichst intensiven Kühleffekt zu erzielen, muß der Lichtbogen also möglichst wirksam tief in die Löschblechschlitze gedrängt werden. Einen Hauptbeitrag hierfür liefert das oben erwähnte selbstinduzierte magnetische Blasfeld des Lichtbogens. Ein weiterer Beitrag läßt sich durch den Mitnahmeeffekt einer entsprechend gerichte ten Strömung des Gases bzw. Plasmas pruielen, in dem der Lichtbogen brennt. Es handelt sich also um ein "Blasen" im ursprünglichen Wortsinn. Eine derartige Strömung kann der Lichtbogen selbst durch die mit ihm einhergehende thermische Expansion des Gases bzw. Plasmas hervorrufen. Bei einer allseitig offenen Löschblechanordnung ist die thermischer Expansionsströmung gleichmäßig nach allen Seiten gerichtet, so daß sie insgesamt keine den Lichtbogen in die Tiefe der Löschblechschlitze drängende Wirkung hat. Verschließt man jedoch die Löschblechschlitze nach außen und bildet - abgesehen von Öffnungen, die für den Eintritt des Lichtbogens in die Löschblechschlitze nötig sind - nur in einem rückwärtigen Bereich Öffnungen aus, so wird das thermisch expandierte Gas zu einem beträchtlichen Teil nur durch diese rückwärtigen Öffnungen austreten. Hieraus resultiert eine in die Tiefe der Löschblechschlitze gerichtete Gas- bzw. Plasmaströmung. Diese Kapselung der Löschblechanordnung liefert also einen zusätzlichen Blaseffekt, welcher den Lichtbogen in die Löschblechschlitze drängt und ihn so schneller zum Erlöschen bringt. Die rasche - zunächst rein elektromagnetisch bedingte - Einwanderung des Lichtbogens in die Löschblechanordnung erzeugt also zwischen den Löschblechen einen Gasüberdruck, der sich kapselungsbedingt über die Austrittsöffnungen (z.B. in Form von Schlitzen) entspannt. Das Lichtbogenplasma folgt der Strömungsrichtung und touchiert dabei tiefergelegene Bereiche der Löschblechoberflächen, womit eine starke Plasmakühlung erzielt wird.

Weitere Ausgestaltungen von Löschblechanordnungen, die teilweise mit den obigen kombinierbar sind, betreffen andere Maßnahmen, die zur Lichtbogenlöschung beitragen. Beim Einwandern des Lichtbogens in den Löschblechschlitz bzw. die mehreren übereinanderliegende Löschblechschlitze teilt er sich - wie gesagt - in mehrere Einzellichtbögen auf. In den Abschnitten dazwischen fließt der Lichtbogenstrom in den Löschblechen. Das von diesem, in den Löschblechen fließenden Strom herrührende Magnetfeld kann den Teillichtbogen im Löschblechschlitz entweder nach außen oder nach innen drängen, je nachdem ob der Strom von innen oder von außen zum Teillichtbogen hin fließt. Beispielsweise wird bei einer Löschblechanordnung mit drei übereinanderliegenden Löschblechen, die zwei Löschblechschlitze bilden, dem weiter innen liegenden Teillichtbogen der Strom im mittleren Löschblech von außen zugeführt. Dieser Strom drängt den Teillichtbogen also unerwünschterweise nach innen. Um dennoch eine Stromzuführung von außen und damit ein Drängen nach außen sicherzustellen, kann wenigstens ein Teil der Löschbleche doppelwandig ausgeführt sein, wobei die beiden Löschblechwände an ihren inneren Enden elektrisch miteinander verbunden sind.

Alternativ zu der oben erläuterten Kapselung der Löschblechanordnung kann wenigstens ein Löschblechschlitz an seinem dem Schaltbewegungsbereich abgewandten (d.h. äußeren) Ende offen sein. Durch diese Maßnahme kann sich ein Teillichtbogen nach Durchwandern des Löschblechschlitzes nach außen aus diesem erstrecken, was wegen der damit einhergehenden Erhöhung der Lichtbogenspannung und Kühlung zu einem noch schnelleren Erlöschen führt. Vorzugsweise mündet der Löschblechschlitz mit dem offenen Ende in eine Löschkammer. Dadurch ist sichergestellt, daß der Lichtbogen in einem bestimmten, dafür vorgesehenen Bereich des Schaltgeräts erlischt, ohne irgendwelche Schäden anrichten zu können.

Vorteilhaft ist hierbei wenigstens eines der Löschbleche eines Löschblechschlitzes an seinem dem Schaltbewegungsbereich abgewandten Ende gekrümmt. Die Krümmung trägt einerseits wegen der durch sie bedingten Feldverformung dazu bei, den Lichtbogen weiter nach außen zu drängen. Andererseits begünstigt sie auch wegen der mit ihr verbundenen Feldstärkeerniedrigung ein schnelleres Erlöschen des Lichtbogens. Besonders vorteilhaft sind bei mehreren übereinanderliegenden Löschblechschlitzen die Krümmungen an aufeinanderfolgenden Schlitzen alternierend ausgebildet, da dies eine räumliche Separierung der austretenden Teillichtbögen unterstützt.

Der im Sicherungseinsatz verlaufende Schmelzdraht hat gegenüber den Leiterschienen und auch den Sicherungskontakten im allgemeinen einen relativ großen Widerstand, so daß sich der Sicherungseinsatz im Betrieb beträchtlich erwärmen kann. Um trotz des Einschlusses im Isolierstoffgehäuse für eine ausreichende Abfuhr dieser Verlustwärme zu sorgen, ist das Schaltgerät vorzugsweise mit wenigstens einem durchgehenden Kanal zur Belüftung des (der) Sicherungseinsatzes (-einsätze) ausgestattet.

Besonders vorzugsweise ist der durchgehende Kanal im wesentlichen gerade und ohne Verengungen ausgebildet, da so die Luftführung, z.B. durch Konvektion, mit hohem Fluß, geringem Srömungswiderstand und in einer im wesentlichen laminaren Strömung erfolgen kann, was eine besonders wirksame Kühlung ermöglicht.

Bei der Ausgestaltung mit offener Löschblechanordnung münden die äußeren offenen Enden der Löschblechschlitze in den durchgehenden Kanal, so daß wenigstens ein Abschnitt des durchgehenden Kanals gleichzeitig als Löschkammer dient. Neben einer kompakteren Bauform des Schaltgeräts trägt dies zur Kühlung des Lichtbogenplasmas und damit zum schnelleren Löschen der Lichtbögen bei.

Die Leiterschienen selbst geben im allgemeinen praktisch keine Verlustwärme ab. Sie stehen jedoch über die Kontakt mittel in thermischem Kontakt mit dem (den) Sicherungseinsatz (-einsätzen). Eine Kühlung der Leiterschienen trägt daher mittels Wärmeleitung indirekt zur Kühlung des (der) Sicherungseinsatzes (-einsätze) bei. Vorteilhaft weist deshalb das Schaltgerät wenigstens einen durchgehenden Kanal zur Belüftung der Leiterschienen auf.

Die Erfindung wird nun an Hand von Ausführungsformen und der beigefügten schematischen Zeichnung näher erläutert. In der Zeichnung zeigen:
- Fig. 1: eine Seitenansicht eines Schaltgeräts in Schließstellung, wobei Einbauten im Schaltgerät als Phantomlinien gezeichnet sind;
- Fig. 2: eine Seitenansicht des Schaltgeräts von Fig. 1, jedoch ohne Seitenwand eines Schaltgerätgehäuses;
- Fic. 3: eine Seitenansicht des Geräts von Fig. 1 mit einem Sicherungseinsatz in Schließstellung, einem in Offenstellung und einem in einer aus dem Gerät genommenen Stellung, ohne die Seitenwand des Schaltgerätgehäuses und eines Anschlußraumgehäu ses.
- Fig. 4: einen Querschnitt entlang der Linie A-A in Fig. 2;
- Fig. 5: einen vergrößerten Ausschnitt von Leiterschienen-Punktkontakten von Fig. 4;
- Fig. 6: einen Querschnitt entlang Linie B-B in Fig. 2;
- Fig. 7: einen vergrößerten Ausschnitt von Fig. 3;
- Fig. 8: einen Längsschnitt eines Anschlußraums einer Ausführungsform mit einer auf Biegung beanspruchten Druckfeder als Antriebsspeicher;
- Fig. 9: eine Seitenansicht der Druckfeder von Fig. 8;
- Fig. 10: Ansichten einer Ausführungsform einer Kontaktklemme, und zwar eine Vorderansicht (Fig. 10a) und beide Seitenansichten (Fig. 10b und 10c) ;
- Fig. 11: eine Seitenansicht einer Fig. 10 ähnelnden Ausführungsform einer Kontaktklemme; und
- Fig. 12: einen Anschlußraum mit einer anderen Ausführungsform von Löschblechanordnungen als in Fig. 4 gezeigt, im Längsschnitt;
- Fig. 13: eine Aufsicht auf eine der (aufgeschnittenen) Löschblechanordnungen der Fig. 12;
- Fig. 14: eine Ansicht der Löschblechanordnung von Fig. 13, aus der Richtung des Sicherungseinsatzes gesehen;
- Fig. 15: eine Ansicht ähnlich Fig. 12, jedoch handelt es sich um eine Ausführung eines Schaltgeräts mit schwenkbarem Sicherungssatz;
- Fig. 16: eine Ansicht entsprechend Fig. 15, jedoch mit einer anderen Art von Löschblechkontaktierung;
- Fig. 17: Querschnittansichten der löschblechseitigen Kontaktklemme von Fig. 16;
- Fig. 18 und 19: Ansichten zweier verschiedener Sicherungshalter mit Sicherungseinsatz, mit Blickrichtung in Längsrichtung des Sicherungseinsatzes.

In der Zeichnung sind funktionsähnliche Teile teilweise mit Bezugszahlen versehen, die sich um die Zahl "100" unterscheiden.

Das Sicherungs-Lastschaltgerät 1 kann drei Messerkontakt-Schmelzsicherungseinsätze 2 des NH-Sunherungssystems aufnehmen. Es eignet sich somit zum iten und Absichern eines Drehstromkreises. Es hat die Form einer langgestreckten Schaltleiste, die neben anderen Schaltleisten an Sammelschienen angeordnet werden kann. Jeder Sicherungseinsatz 2 ist in einem eigenen Anschlußraum 3 angeordnet, der bis auf Belüftungsöffnungen (Belüftungsschlitze 4 und Öffnungen zu Belüftungskanälen 58) vollständig geschlossen ist, und zwar sowohl in Schließstellung eines Sicherungseinsatzes 2 (Fig. 3, oberer Sicherungseinsatz) als auch in dessen Offenstellung (Fig. 3, mittlerer Sicherungseinsatz).

Um diesen vollständigen Abschluß zu erzielen, wirken mehrere Gehäuse bzw. Gehäuseteile zusammen: Ein äußeres Schaltgerätgehäuse 5 in Form eines langgestreckten, an einer Längsseite offenen Quaders, das Leiterschienen 6 zur Stromzuführung und Kontaktmittel 7 zum Anschluß der Sicherungseinsätze 2 an die Leiterschienen 6 aufnimmt; darin beweglich eingesetzt ein Anschlußraumgehäuse 8, das ebenfalls im wesentlichen quaderförmig ist, an zwei gegenüberliegenden Seiten im wesentlichen offen ist und durch Zwischenwände 54 die in Längsrichtung hintereinander liegenden Anschlußräume 3 definiert, wobei eine offene Seite zum Durchgriff der Kontaktmittel 7 bestimmt ist; und eine Abdeckplatte 10 an einem Sicherungshalter 9, die auf die andere offene Seite aufsetzbar ist und sie verschließt. Das Schaltgerätgehäuse 5, die Anschlußraumgehäuse 8 und die Abdeckplatten 10 sind aus Isolierstoff gefertigt.

Die Leiterschienen 6 führen von Zugangsklemmen 11 am Boden des Schaltgerätgehäuses 5 (d.h. an der der offenen Seite gegenüberliegenden Seite) zu den Kontaktmitteln 7 eines Sicherungskontakts und von den Kontaktmitteln 7 des anderen Sicherungskontakts zu Abgangsklemmen 12, die für alle Phasen gemeinsam an einem Stirnende des Schaltgeräts 1 bei einer Abgangsabdeckung 13 angeordnet sind. Die Zugangsklemmen 11 sind so beabstandet, daß das Schaltgerät 1 an Sammelschienen anschließbar ist. Um an (je nach Landesnorm) verschieden beabstandete Sammelschienen zu passen, weisen die Zugangsklemmen 11 Langlöcher auf. Das Schaltgerät 1 kann wahlweise mit den Abgangsklemmen 12 unten (Fig. 1) oder oben (Fig. 2) montiert werden, wofür - was unten noch näher erläutert wird - keinerlei Umbau, sondern nur ein Umstecken eines Bedienhebels 14 erforderlich ist.

Zur Ausführung der Schaltbewegung der Sicherungseinsätze 2 dient ein Ritzel-Zahnstangen-Trieb 15 (Fig. 2 und 3). Er setzt eine antriebsseitige Schwenkbewegung des Bedienhebels 14 abtriebsseitig in eine geradlinige Translationsbewegung (also eine Parallelführung) des Anschlußraumgehäuses 8 und der daran gekoppelten Sicherungshalter 9 mit den Sicherungseinsätzen 2 um. Er umfaßt zwei Paare von miteinander kämmenden, gegenläufigen Ritzeln 16, die am Schaltgerätgehäuse 5 gelagert sind und von denen das in Einbaustellung obere bewegungsschlüssig mit dem Bedienhebel 14 verbunden ist. Die Ritzel 16 kämmen in Längsrichtung außen mit Zahnstangen 17 am Anschlußraumgehäuse 8. Ritzel 16 und Zahnstangen 17 sind im Inneren des Schaltgeräts 1 nahe der Seitenwände des Schaltgerätgehäuses 5 angeordnet. Die Paare von Zahnstangen 17 sind in Längsrichtung des Lastschaltgeräts 1 um wenigstens die Hälfte der Länge eines Anschlußraums 3, vorzugsweise um wenigstens eine ganze Länge hiervon, beabstandet, um ein Verkanten des Anschlußraumgehäuses 8 im Schaltgerätgehäuse 5 bei einer Schaltbetätigung auszuschließen. Die Sicherungseinsätze 2 sind mit ihren Längsachsen parallel zur Schaltgerätlängsachse angeordnet. Durch die geradlinige Translationsbewegung senkrecht zu dieser Achse werden sie mit beiden Sicherungskontakten bzw. Kontaktmessern 31 gleichzeitig von den Kontaktmitteln 7 abgezogen, so daß das Schaltgerät 1 eine Doppeltrennung jeder Phase realisiert.

Der Bedienhebel 14 ist als elastisch zusammendrückbarer Bügel ausgebildet, der in komplementäre Ausnehmungen 18 in den Ritzeln 16 eines gleichläufigen Ritzelpaares bewegungsschlüssig einrasten kann. Zum "Umbau" des Schaltgeräts 1 von einer Stellung mit z.B. unten liegenden Abgangsklemmen 12 in eine solche mit oben liegenden, löst man - ohne jedes Werkzeug - den Bedienhebel 14 durch Zusammendrücken aus den Ausnehmungen 18 des einen Paars von Ritzeln 16 und verbindet ihn mit dem anderen, dann oben liegenden Paar von Ritzeln 16 durch elastisches Einrasten in dessen Ausnehmungen 18. Somit kann in beiden Einbaustellungen ein Abschalten durch Ziehen des Bedienhebels 14 von oben zur Bedienungsperson hin nach unten erfolgen.

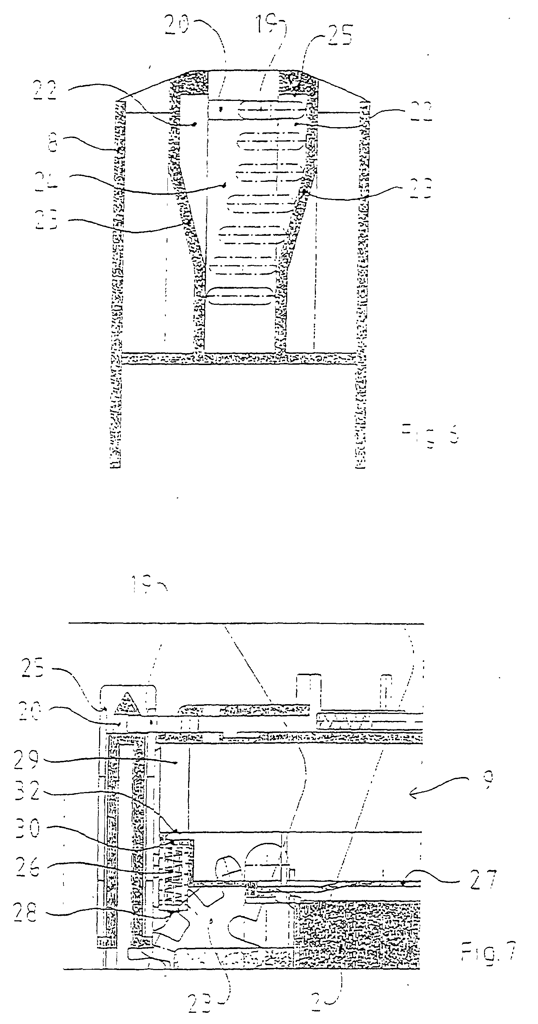

Das Schaltgerät 1 erlaubt, mit einer Ausschaltbetätigung wahlweise entweder nur eine Phase, zwei Phasen oder alle drei Phasen auszuschalten. Hierzu dient jeweils ein An- und Abkoppelmittel zwischen jedem Sicherungshalter 9 und dem Schaltgerätgehäuse 5 (Fig. 6 und 7). Es wird gebildet durch ein Paar von längsbeweglichen federbelasteten Raststangen 19 am Sicherungshalter 9, die bei nicht komprimierter Feder in Längsrichtung über gegenüberliegende Ränder der Abdeckplatte 10 ragen und in komplementäre Rastlöcher 20 im Anschlußraumgehäuse 8 eingreifen können. In dieser "ersten Raststellung" sind Sicherungshalter 9 und Anschlußraumgehäuse 8 miteinander gekoppelt. Bei einer Ausschaltbetätigung folgt der Sicherungshalter 9 und damit der Sicherungseinsatz 2 der Bewegung des Anschlußraumgehäuses 8 nach außen, so daß die Kontaktmesser 31 der Sicherungseinsätze 2 von den Kontaktmitteln 7 getrennt werden.

Durch Zusammendrücken eines Griffpaars 21 auf der Abdeckplatte 10 können die Raststangen 19 aus den Rastlöchern 20 ausgerückt werden. Die Raststangen 19 sind außerdem seitlich verschiebbar, d.h. in einer Richtung senkrecht zur Längsrichtung und zur Schaltbewegungsrichtung. Diese seitliche Verschiebbarkeit ermöglicht es, die Raststangen 19 auf eine im wesentlichen glatte Fläche 22 neben dem Rastloch 20 aufzusetzen. Da die Reibungskraft zwischen Kontaktmitteln 7 und den Kontaktmessern 31 großer ist als diejenige zwischen den Raststangen 19 und den glatten Flächen 22, folgt der Sicherungshalter 9 der Bewegung des Anschlußraumgehäuses 8 bei einer Ausschaltbetätigung nicht; der Sicherungseinsatz 2 bleibt mit den Kontaktmitteln 7 verbunden.

In dieser "zweiten Raststellung" sind also Sicherungshalter 9 und Anschlußraumgehäuse 8 voneinander abgekoppelt.

Aus sicherheitstechnischen Gründen sollen nach jedem Schaltspiel alle Sicherungshalter 9 mit dem Anschlußraumgehäuse 8 gekoppelt sein, damit bei einer ggf. notwendigen Notabschaltung rasch alle Phasen getrennt werden können. Für ein automatisches Rücksetzen der An- und Abkoppelmittel in diese "Standardkopplung" dienen im Bereich jedes Rastloches 20 am Anschlußraumgehäuse 8 eine trichterförmige Rücksetzführung 23 und eine Mittennut 24. Die Rücksetzführung 23 umrandet die glatte Fläche 22 und begrenzt so die maximal mögliche seitliche Versetzung der Raststange 19. Auf dem Niveau des Rastloches 20 läßt sie die größte seitliche Versetzung zu, um das Abkoppeln des Sicherungshalters 9 vom Anschlußraumgehäuse 8 zu erlauben. Zum Boden des Anschlußraumgehäuses 8 hin verengt sie sich, so daß die seitlich versetzte Raststange 19 im Verlauf einer Ausschaltbetätigung des Schaltgeräts 1, der der abgekoppelte Sicherungshalter 9 ja nicht folgt, von ihr zur Mitte hin zurückgesetzt wird und schließlich aufgrund der Federbela stung in die gegenüber der glatten Fläche 22 vertiefte Mittennut 24 fällt. Fig. 6 veranschaulicht diesen Rücksetzvorgang durch Darstellung mehrerer aufeinanderfolgender "Stationen" der Raststange 19. Im Verlauf der anschließen den Einschaltbetätigung wird die Raststange 19 von der Mittennut 24 mittig geführt, so daß sie schließlich am Ende der Einschaltbetätigung aufgrund der Federbelastung selbsttätig wieder in das Rastloch 20 einrasten muß. Damit ist nach jedem Schaltspiel automatisch die Standardkopplung eingerichtet.

Um beispielsweise von dem in Fig. 1 gezeigten Zustand des Schaltgeräts 1 zu dem in Fig. 3 gezeigten zu gelangen, drückt man zunächst an der obersten Abdeckplatte 10 das Griffpaar 21 zusammen und übt dann einen seitlichen Druck darauf aus, um durch Ausrücken der Raststangen 19 aus den Rastlöchern 20 und Aufsetzen auf die glatten Flächen 22 die Kopplung zwischen dem obersten Sicherungshalter 9 und dem Anschlußraumgehäuse 8 zu lösen. Anschließend schwenkt man den Bedienhebel 14 von oben in die in Fig. 3 gezeigt waagrechte Position. Die Schwenkbewegung wird durch den Ritzel-Zahnstangen-Trieb 15 in eine geradlinige Translationsbewegung des Anschlußraumgehäuses 8 nach vorne umgesetzt. Dieser Bewegung folgen die gekoppelten Sicherungshalter 9, d.h. der untere und mittlere, jedoch nicht der abgekoppelte obere Sicherungshalter 9. Entsprechend werden der untere und der mittlere Sicherungseinsatz 2 von ihren Kontaktmitteln 7 weggezogen, während der obere Sicherungseinsatz 2 mit seinen Kontaktmitteln 7 verbunden bleibt. Durch weiteres Zusammendrücken des Griffpaars 21 des untersten Sicherungshalters 9 zieht man die Raststangen 19 vor einen äußeren Rand 25 der Rücksetzführung 23 und kann ihn dann mit dem daran gehaltenen Sicherungseinsatz 2 aus dem Anschlußraum 3 nehmen. Die Raststangen 19 des abgekoppelten Sicherungshalters 9 sind im Verlauf der Ausschaltbetätigung durch die Rücksetzführung 23 in die Mittennut 24 gesetzt worden. Nach Wiedereinsetzen des herausgenommenen Sicherungshalters 9 kann man das Schaltgerät 1 durch Schwenken des Bedienhebels 14 nach oben wieder in die in Fig. 1 gezeigte Schließstellung bringen. Hierdurch werden der untere und mittlere Sicherungseinsatz 2 wieder mit ihren Kontaktmitteln 7 in Verbindung gebracht. Die Raststangen 19 des oberen Sicherungshalters 9 gleiten im Verlauf der Einschaltbetätigung entlang der Mittennut 24 und rasten schließlich in die Rastlöcher 20 ein, so daß alle Sicherungshalter 9 wieder mit dem Anschlußraumgehäuse 8 gekoppelt sind.

Jeder Sicherungshalter 9 ist mit einem Antriebs-Speicher in Form von Druckfedern 26, 126, die zwischen die Abdeckplatte 10 und eine den Sicherungseinsatz 2 tragende Halterplatte 27 geschaltet sind, ausgestattet.

Gemäß Fig. 7 sind die Druckfedern 26 drehbeanspruchte Federn, insbesondere Schraubenfedern.

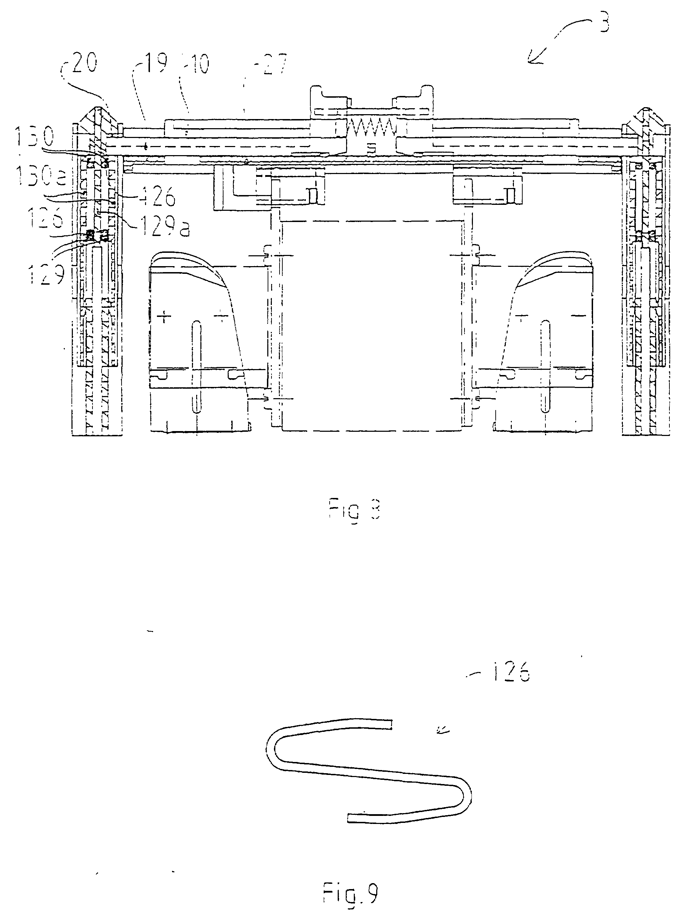

Gemäß Fig. 8 und 9 sind die Druckfedern 126 biegebeanspruchte Federn, die beispielsweise ringförmig, U-förmig oder - wie dargestellt - S-förmig sein können. Die Druckfedern 126 sind platzsparend in die Stirnseiten des jeweiligen Anschlußraumgehäuses 8 integriert. Der der Abdeckplatte 10 abgewandte Teil der Druckfeder 126 sitzt auf einem Flansch 129 auf, der über ein inneres Wandteil 129a und die Rastloch-Raststangen-Verbindung 20, 19 mit der Abdeckplatte 10 verbunden ist, wohingegen der ihr zugewandte Teil auf einem Flansch 130 aufsitzt, der über ein äußeres Wandteil 130a mit der der den Sicherungseinsatz 2 tragenden Halterplatte 27 verbunden ist. In jeder Stirnseite können mehrere (insbesondere zwei) Druckfedern 126 angeordnet sein.

Bei einer Ausschaltbetätigung des Schaltgeräts 1 wird zunächst nur die mit dem Anschlußraumgehäuse 8 gekoppelte Abdeckplatte 10 unter Kompression der Druckfedern 126 nach außen bewegt. Die Halterplatte 27 mit dem Sicherungseinsatz 2 folgt dieser Bewegung erst, wenn die Druckfedern 126 vollständig komprimiert sind oder eine Mitnahme durch einen Anschlag erfolgt. Sobald die Kontaktmesser 31 aus den Kontaktmitteln 4 herausgezogen sind, dehnen sich die Druckfedern 126 wieder aus und bewegen dadurch die Halterplatte 27 mit dem Sicherungseinsatz 2 schnell nach außen. Somit erfolgt die Ausschaltbewegung nach der Kontakttrennung mit einer Geschwindigkeit, die nahezu unabhängig von der Schwenkgeschwindigkeit des Bedienhebels 14 ist. Durch einfache konstruktive Maßnahmen (z.B. Auswahl einer bestimmten Federcharakteristik, Federvorspannung, maximale Kompression) ist die Geschwindigkeit der Ausschaltbewegung auf einen mittleren, für eine Lichtbogenlöschung optimalen Wert eingestellt.

Bei einer Einschaltbetätigung tritt der Antriebsspeicher nicht in Aktion; hier wird die Betätigungskraft direkt auf die Halterplatte 27 übertragen (bei der Ausführungsform der Fig. 7 beispielsweise über einen Anschlag 32 an der Lasche 29).

Vorteilhafte (nicht gezeigte) Ausführungsform sind so ausgebildet, daß die Kontakttrennungen der einzelnen Pole zeitlich versetzt stattfinden, was z.B. durch unterschiedliche Einstellungen der größtmöglichen Kompression der Druckfedern 126 erzielt werden kann.

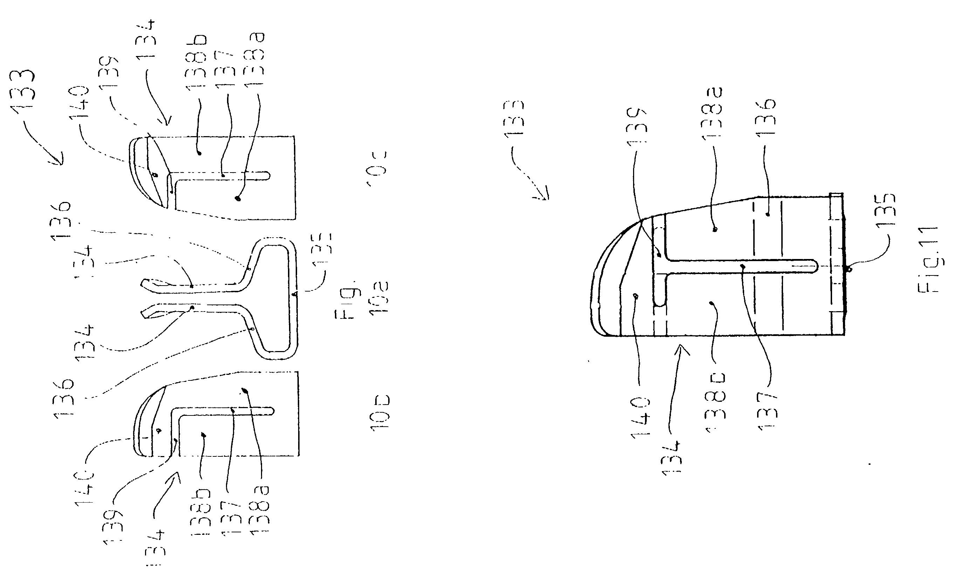

Das Kontaktmittel 7 wird bei bevorzugten Ausführungsformen durch eine Kontaktklemme 133 mit entgegengesetzt gerichteten Strompfaden gebildet. Die Figuren 10a - 10c zeigen eine derartige Kontaktklemme 133, die aus einem Stück als Biege-Stanz-Teil gefertigt ist. Sie weist eine Basis 135 auf, mit der sie mit einer Leiterschiene 6 leitend verbindbar ist. Senkrecht zur Basis 135 stehen, jeweils unter Zwischenschaltung eines Versetzungsstücks 136, zwei elastisch federnde Klemmteile 134, die sich flächig gegenüberliegen, und zwischen sich einen Spaltraum bilden, der etwas schmaler als die Dicke eines Kontaktmessers 31 ist. Im äußeren Bereich erweitert sich der Spaltraum nach außen, um eine Art Einführtrichter zu bilden. Beide Klemmteile 134 weisen einen ungefähr mittig verlaufenden Längsschlitz 137 auf, der sich nicht ganz bis zum äußeren Ende des Klemmteils 134 erstreckt und dieses in zwei Klemmteil-Abschnitte 138a und 138b aufteilt. An das äußere Ende des Längsschlitzes 137 schließt, im wesentlichen senkrecht zu ihm, ein Querschlitz 139 an, der in den beiden Klemmteilen 134 unterschiedlich verläuft: In einem der Klemmteile 134 (Fig. 10c) erstreckt er sich zum Sicherungseinsatz 2 hin, in anderen Klemmteil 134 (Fig. 10b) erstreckt er sich hingenen von diesem weg. Die Längsschlitze 139 bilden so Querstücke 140 aus, die unterschiedlich mit ihrem übrigen Klemmteil 134 verbunden sind: Beim erstgenannten Klemmteil 134 ist das Querstück 140 mit dem vom Sicherungseinsatz 2 entfernten Klemmteil-Abschnitt 138b verbunden ist und überragt den dem Sicherungseinsatz 2 benachbarten Klemmteil-Abschnitt 138a, während es beim gegenüberliegenden zweitgenannten Klemmteil 134 - umgekehrt - mit dem dem Sicherungseinsatz 2 benachbarten Klemmteil-Abschnitt 138 a verbunden ist und den hiervon entfernten Klemmteil-Abschnitt 138b überragt.

Die so ausgestaltete Kontaktklemme 133 funktioniert folgendermaßen: Im Verlauf einer Einschaltbewegung nähert sich das Kontaktmesser 31 dem äußeren trichterartigen Bereich des Spaltraumes und kommt gleichzeitig in Berührung mit den beiden Querstücken 140, zunächst noch ohne die beiden Klemmteile 134 auseinanderzudrücken. Es fließt nun ein hoher Einschaltstrom, aufgeteilt in Teilströme in den beiden Klemmteilen 134. Da die Querstücke 140 mit diagonal gegenüberliegenden Klemmteil-Abschnitten 138a, 138b verbunden sind, fließen die Teilströme in den Querstücken 140 in entgegengesetzten Richtungen fließen (und zwar fließt ein Teilstrom vom Sicherungseinsatz 2 weg, während der andere zu ihm hin fließt). Hingegen fließen sie im Bereich der (diagonal gegenüberliegenden) Klemmteil-Abschnitte 138b und 138a in gleicher Richtung (nämlich zu oder von der Leiterschiene 6) fließen. Die Lorentz-Kraft führt daher im Bereich der Querstücke 140 zu einer anziehenden und im Bereich der Klemmteil-Abschnitte 138a und 138b zu einer anziehenden Kraftkomponente, die sich teilweise oder ganz kompensieren. Ein Zusammenziehen der Kontaktklemme 133 aufgrund der mit dem Einschaltstrom einhergehenden Lorentz-Kräfte wird dadurch vermieden, so daß die Einschaltbewegung ohne übermäßigen Kraftaufwand und in kurzer Zeit vollendet werden kann.

Bei einer Ausführungsform gemäß Fig. 11 erstreckt sich der Querspalt 140 auch in den Bereich desjenigen Klemmteil-Abschnitts 138, mit dem das Querstück 137 verbunden ist, hinein. Je tiefer er sich in diesen Bereich hineinerstreckt, um so größer ist der Bereich entgegengesetzten Stromflusses und um so ausgeprägter ist damit die abstoßende Kraftkomponente. Durch Variation dieser Tiefe ist damit auf einfache Weise die resultierend Kraft konstruktiv einstellbar, ohne daß die Lage des Längsspaltes 137 verändert werden müßte (was unerwünschten Einfluß auf die Federsteifigkeit der Klemmteil-Abschnitte 138a und 138b haben könnte).

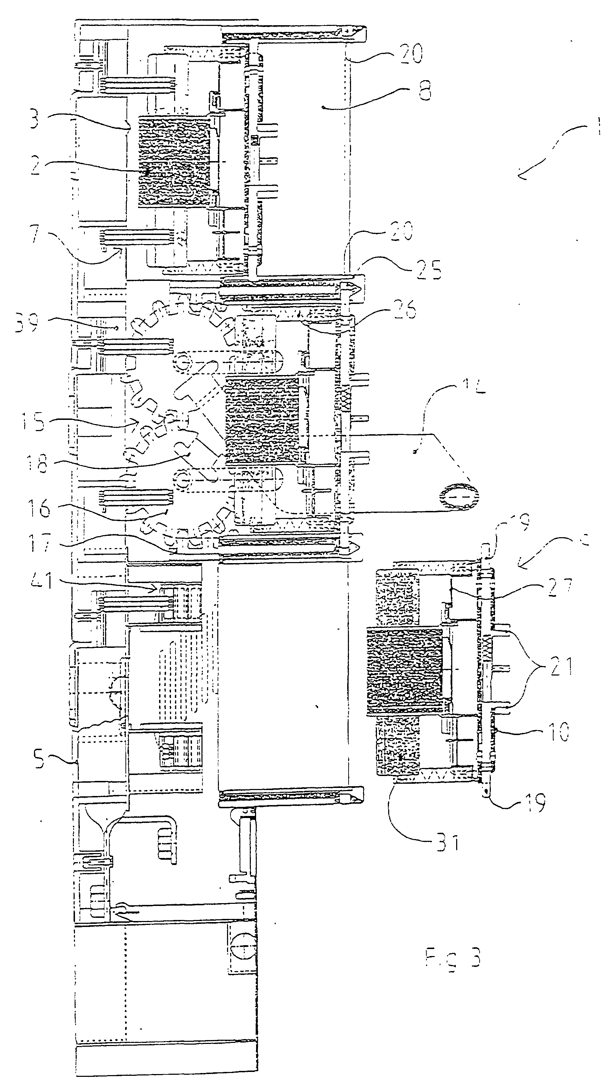

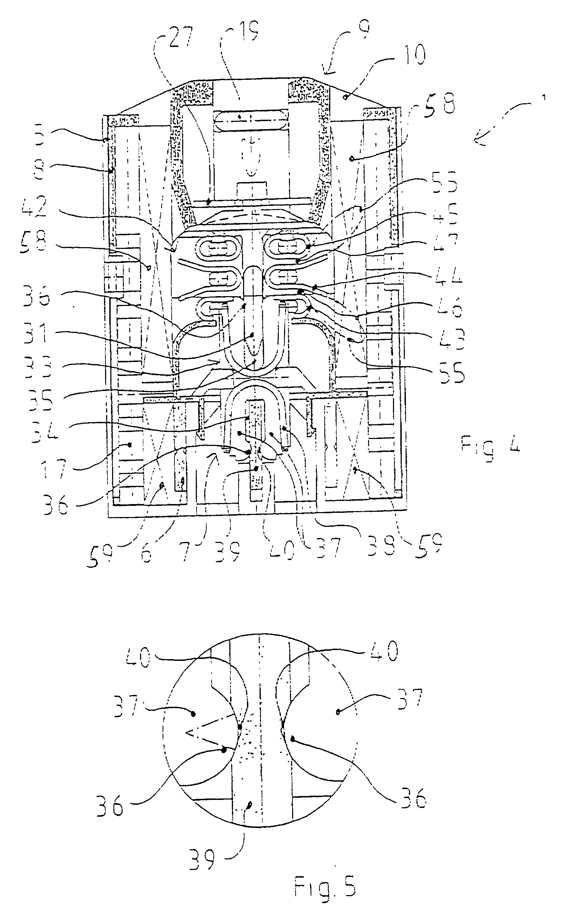

Eine Ausbildung der Kontaktmittel 7 gemäß Figuren 4 und 5 betrifft die Erzielung eines besonders geringen Übergangswiderstands. Hierbei werden die Kontaktmittel 7 durch Doppelkontaktzangen 33 mit in entgegengesetzte Richtungen weisenden Zangenöffnungen 34, 35 gebildet (Fig. 4). Im Inneren jeder Zangenöffnung 34, 35 sind zwei sich gegenüberliegende, im wesentlichen kugelabschnittsförmige Vorsprünge 36 ausgebildet. Die Doppelkontaktzange 33 ist in der Längsrichtung der Zangenöffnungen 34, 35 zweigeteilt, und zwar in zwei Zangenbackenteile 37. Diese sind elastisch miteinander verbunden, hier durch zwei U-förmige, entgegengesetzt gerichtete Blattfedern 38. Die elastische Verbindung der Zangenbackenteile 37 ist derart, daß sie einer Spreizung der Zangenöffnungen 34,35 entgegenwirkt, wobei die Zangenbackenteile 37 in Längsrichtung nicht völlig starr zueinander liegen, sondern eine kleine Strecke gegeneinander verschiebbar sind.

Die Leiterschienen 6 sind so geformt, daß sich jeweils unterhalb eines Kontaktmessers 31 ein mit diesem fluchten der Leiterschienenabschnitt 39 befindet, das heißt, daß die Mittelebenen des Kontaktmessers 31 und des Leiterschienen abschnitts 39 in einer Ebene liegen. In dem Leiterschienenabschnitt 39, und zwar in dessen gegenüberliegenden Flachseiten, befinden sich jeweils mehrere prismenförmige Vertiefungen 40, die so angeordnet sind, daß bei aufgesteckter Doppelkontaktzange 33 die Vorsprünge 36 der ersten Zangenöffnung 34 in jeweils eine Vertiefung auf jeder Flachseite eingreifen können (Fig 5). Die Passung der ersten Zangenöffnung 34 an dem Leiterschienenabschnitt 39-einerseits kugelabschnittförmige Vorsprünge 36, andererseits prismenförmige Vertiefungen 40 - stellt zusammen mit der gegenseitigen Längsverschiebbarkeit der die Vorsprünge 36 tragenden Zangenbackenteile 37 eine Vierpunktauflage der Doppelkontaktzange 33 an dem Leiterschienenabschnitt 39 sicher.

Die zweite Zangenöffnung 35 dient der Aufnahme des Kontaktmessers 31 in der Schließstellung des Sicherungseinsatzes 2. Die Passung - einerseits kugelabschnittförmige Vorsprünge 36, andererseits ebene Kontaktmesserflächenstellt hier eine Zweipunktauflage der Doppelkontaktzange 33 sicher. Wegen der unterschiedlichen Passungen ist auch die Haltekraft an dem Kontaktmesser 31 geringer als an dem Leiterschienenabschnitt 39, so daß sichergestellt ist, daß bei der Ausschaltbewegung das Kontaktmesser 31 die Doppel kontaktzange 33 nicht etwa mitnimmt, sondern diese mit dem Leiterschienenabschnitt 39 verbunden bleibt.

Mehrere Doppelkontaktzangen 33 sind pro Kontaktmesser 31 angeordnet, um eine Vielpunktauflage und damit einen relativ geringen elektrischen Übergangswiderstand zu realisieren. Bei der gezeigten Ausführungsform mit drei Doppelkontaktzangen 33 pro Kontaktmesser 31 ist beispielsweise an jedem Kontaktmesser 31 eine Sechspunktauflage und an dem zugeordneten Leiterschienenabschnitt 39 eine Zwölfpunktauflage realisiert.

Eine Löschblechanordnung 41, 141 für jeden Sicherungskontakt befindet sich in Ausschaltbewegungsrichtung unmittelbar außerhalb der Kontaktmittel 7 (Fig. 4 und 12-16). Gemäß Ausführungsform der Fig. 4 umfaßt sie zwei zur Mittelebene des Kontaktmessers 31 symmetrische Löschblechstapel 42. Diese werden jeweils durch mehrere, in Ausschaltbewegungsrichtung übereinander angeordnete Löschbleche gebildet, die aus einem stromleitenden und magnetisierbaren Material sind. Bei dem hier gezeigten Schaltgerät 1 umfaßt ein Löschblechstapel 42 drei Löschbleche 43-45, die zwischen sich zwei vom Schaltbewegungsbereich seitlich nach außen führende Löschblechschlitze 46, 47 bilden. Das erste Löschblech 43 berührt mit seinem inneren Ende die Doppelkontaktzangen 33, so daß es elektrisch mit ihnen in Kontakt steht. An seinem äußeren Ende ist es gekrümmt, im Querschnitt hat es die Form eines "J". Das zweite Löschblech 44 hat im Querschnitt im wesentlichen die Form eines "U" mit nach innen gewandtem Verbindungsbogen. Anders ausgedrückt ist es doppelwandig, wobei den Löschblechschlitzen 46, 47 jeweils eine Wand zugewandt ist und die beiden Wände nur an deren inneren Enden elektrisch miteinander verbunden sind. Das dritte Löschblech 45 ähnelt im Querschnitt der Form eines "O", das jedoch elektrisch an seiner in Schaltbewegungsrichtung äußeren Seite unterbrochen ist. Die Krümmungen im äußeren Bereich des ersten 43 und dritten 45 Löschblechs sind einander entgegengesetzt. Die beiden Wände des zweiten Löschblechs 44 sind in ihrem äußeren Bereich mit einem spitzen Winkel (z.B. ungefähr jeweils 20°) abgewinkelt, so daß sie jeweils der Krümmung des ersten 43 bzw. dritten 45 Löschblechs etwas folgen. Die Löschbleche 43-45 sind mit ihren inneren Enden so angeordnet, daß sie dem Messerkontakt 31 bei dessen Schaltbewegung möglichst nahe kommen, ohne ihn jedoch zu berühren. Die Löschblechschlitze 46, 47 führen somit von dem Schaltbewegungsbereich nach außen, wo sie aufgrund der entgegengesetzten Krümmungen und Abwinklungen etwas voneinander weg weisend in einen von zwei seitlichen Kanälen 58 zur Belüftung der Sicherungseinsätze 2 münden.

Bei einer Ausschaltbewegung des Sicherungseinsatzes 2 bildet sich im Augenblick der Trennung des Kontaktmessers 32 von den Vorsprüngen 36 der zweiten Zangenöffnung 35 ein Lichtbogen dazwischen aus. Dieser wird von einem, im wesentlichen durch die Löschbleche 43-45 bedingten, selbstinduzierten magnetischen Blasfeld seitlich zu einem der beiden Löschblechstapel 12 hin gedrängt und tritt, unterstützt durch die elektrische Verbindung des ersten Löschblechs 43 mit den Kontaktmitteln 7, in den ersten Löschblechschlitz 46 ein. Im Verlauf der weiteren Ausschaltbewegung verlängert sich der Lichtbogen, dringt auch in den zweiten Löschblechschlitz 47 ein und wird in Teillichtbögen aufgeteilt, die jeweils die Löschblechschlitze 46, 47 und ggf. die Strecke vom dritten Löschblech 45 zum Messerkontakt 31 überspringen. Zwischen den Teillichtbögen fließt der Lichtbogenstrom in den Löschblechen 43-45, und zwar wegen der doppelwandigen, innen verbundenen Ausbildung des mittleren Löschblechs 44 nur jeweils zwischen dem inneren Löschblechende und dem Ort des Teillichtbogens. Aufgrund dieser Stromzuführung werden die Teillichtbögen in den Löschblechschlitzen 46, 47 weiter magnetisch nach außen gedrängt, bis sie sich schließlich in den freien Raum des Kanals 58 ausbauchen, wie es in Fig. 5 bei Bezugszeichen 55 veranschaulicht ist. Durch die hiermit verbundene Erhöhung der Lichtbogenspannung und Kühlung erlöschen sie rasch in dem dafür vorgesehenen Bereich der Kanäle 58. Diese dienen somit auch als Lichtbogen-Löschkammern.

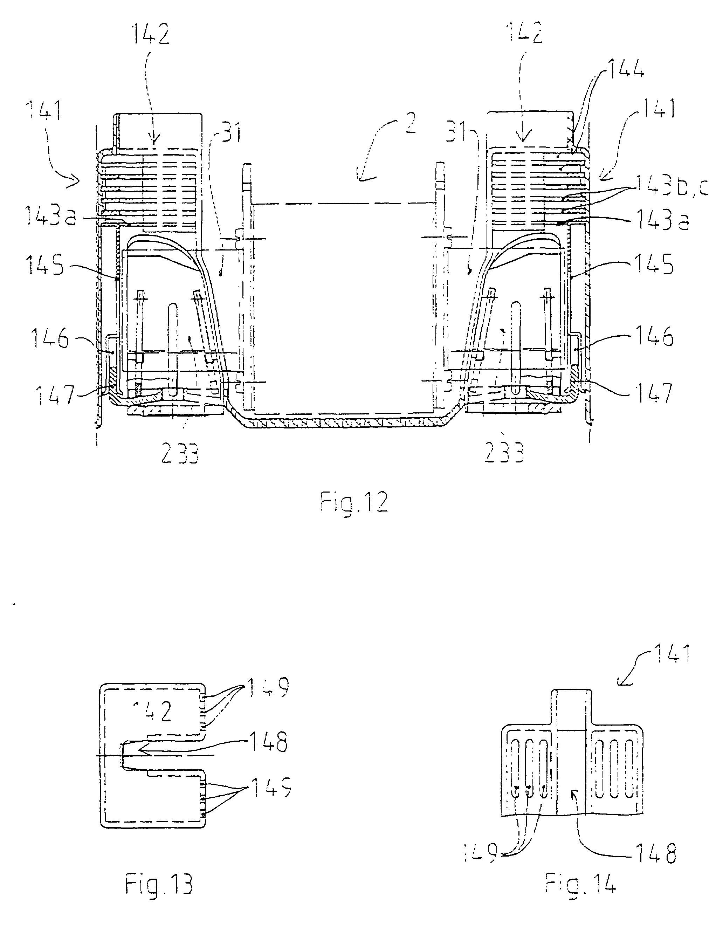

Eine andere Ausführungsform einer Löschblechanordnung 141 gemäß Fig. 12-15 hat einen zur Mittelebene des Kontaktmessers 31 symmetrischen Löschblechstapel 142, der den Schaltweg des Kontaktmessers 31 U-förmig umfaßt. Er ist aufgebaut aus mehreren (hier sechs) parallel übereinander liegenden einfachen Löschblechen 143a-f in U-Form, die zwischen sich entsprechende Löschblechschlitze 144a-e ausbilden. Das erste Löschblech 143a ist elektrisch leitend mit einer Kontaktstange 145 verbunden, welche sich ins Innere des Schaltgeräts 1 erstreckt und an ihrem Ende eine Vergabelung 146 aufweist. Ein nach außen, zur Kontaktstange 145 gerichteter Dorn 147 ragt ungefähr in der Höhe der Kontaktklemmen-Basis 235 an der Kontaktklemme 236 vor, und zwar an deren dem Sicherungseinsatz 2 abgewandten Ende. Er ist Teil einer elastischen Mutter, welche der Befestigung der Kontaktklemme 233 an einer der Leiterschienen 6 dient, und ist elektrisch mit der Kontaktklemme 233 und der Leiterschiene 6 verbunden. Im zusammengefügten Zustand des Sicherungs-Lastschaltgeräts 1 nimmt die Vergabelung 146 den Dorn 147 auf, beide bilden so eine elektrische Steckverbindung.

Diese Steckverbindung erlaubt, das Gehäuse 5 oder 8 einfach auf eine die Leiterschienen 6 tragende Basis des Schaltgeräts 1 aufzusetzen und von dieser abzunehmen. Die beiden Dorne 147 eines Anschlußraumgehäuses 8 sind zu dessen Mittelpunkt symmetrisch angeordnet, um auch ein um 180° gedrehtes Aufsetzen des Gehäuses 5 bzw. 8 zu erlauben.

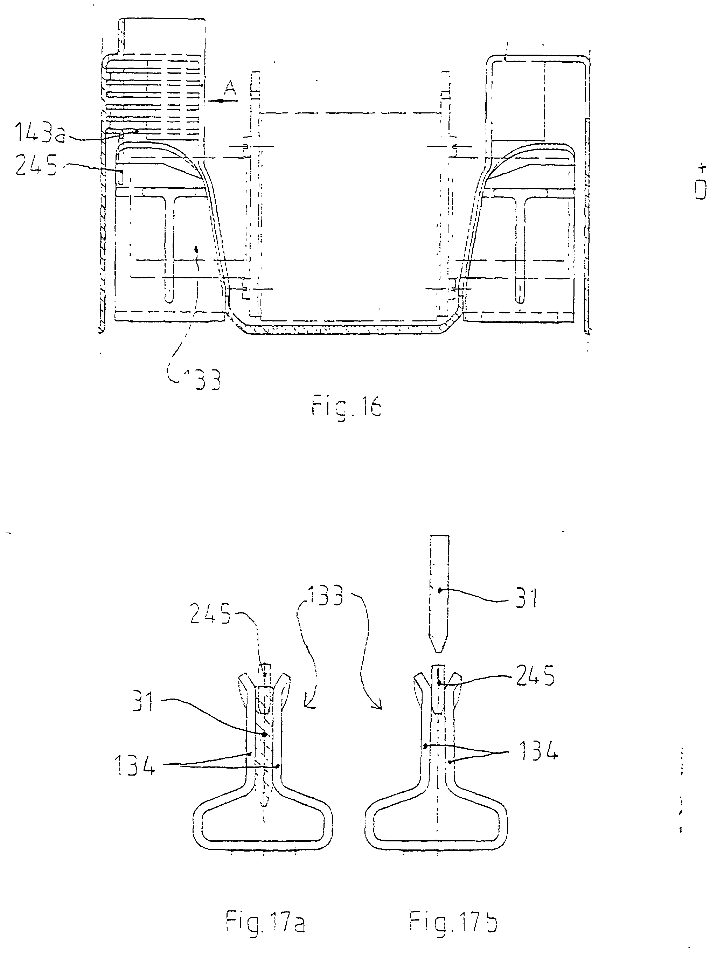

Dies ist insbesondere vorteilhaft bei der Ausführungsform eines Schaltgeräts 1 der Fig. 15: Bei dieser Ausführungsform wird die Ausschaltbewegung nicht durch eine Paralleltranslation, sondern durch eine Schwenkbewegung des Sicherungseinsatzes 2 um eine Drehachse D, mit Hilfe z.B. eines Schwenkhebels ausgeführt. Die Kontakttrennung findet zunächst also nur an der der Drehachse D abgewandten Kontaktklemme 233 statt. Bei Trennung des zweiten Kontakts fließt bereits kein Strom mehr. Folglich kann nur auf der Seite der ersten Kontakttrennung ein Lichtbogen entstehen, des Sicherungseinsatzes zwei Lichtbögen entstehen, so daß nur diese Seite mit einer Löschblechanordnung 141 ausgerüstet zu sein braucht. Die Ausrüstung auch dieser Ausführungsform mit zwei symmetrischen Dornen 147 erlaubt jedoch ein einfaches, um 180° gedrehtes Aufstecken des (asymmetrischen) Gehäuses 5 bzw. 8, und damit eine einfache, um 180° gedrehte Montage des Lastschaltgeräts 1. Das um 180° drehbare Aufstecken der Gehäuse 5 bzw. 8 ist bei dieser Ausführungsform nötig, um sowohl bei untenlegenden wie auch bei obenliegenden Stromzuführungsleitungen ein Ausschalten durch einheitliche Hebelbetätigung von oben nach unten zu realisieren.

Eine weitere vorteilhafte Ausführungsform zur Kontaktierung des ersten Löschblechs zeigen die Fig. 16, 17a und 17b. Diese Ausführungsform ist gleichermaßen verwendbar bei paralleltranslatiertem Sicherungseinsatz, z.B. gemäß Fig. 12, und bei schwenkbarem Sicherungseinsatz 2, z.B. gemäß Fig. 15. Die im Zusammenhang mit Fig. 12 bis 15 gemachten Ausführungen treffen vollinhaltlich auch auf die vorliegende Ausführungsform zu. Ein Unterschied zu den Ausführungsformen der Fig. 12 bis 15 besteht nur darin, daß statt der Kontaktstange 145 ein Kontaktlappen 245 mit dem ersten Löschblech 143a verbunden ist (die Vergabelung 146 und der Dorn 147 entfallen). Dieser Kontaktlappen 245 erstreckt sich mittig in relativ geringe Tiefe zwischen die Klemmteile 134 der Kontaktklemme 133. Seine Dicke ist etwas geringer (z.B. 5 mm) als die Dicke des Kontaktmesser 31 (Dicke z.B. 6 mm).

Bei in die Kontaktklemme 133 eingeführtem Kontaktmesser 31 sind die Klemmteile 134 vom Kontaktlappen 245 aufgrund dessen geringerer Dicke abgehoben (Fig. 17a). Es gibt dann keinen elektrischen und thermischen Kontakt zwischen diesen Teilen. Beim Herausziehen des Kontaktmessers 31 legen sich die Klemmteile 234 aufgrund der großen Elastizität der Kontaktklemme 133 mit Pressung an den Kontaktlappen an und vermitteln den Kontakt (Fig. 17b). Die 180°-Symmetrie ist bei dieser - wegen ihrer thermischen Entkopplung und ihrer fertigungstechnischen Einfachheit sehr vorteilhaften - Ausführungsform ohne zusätzliche Maßnahmen gegeben.

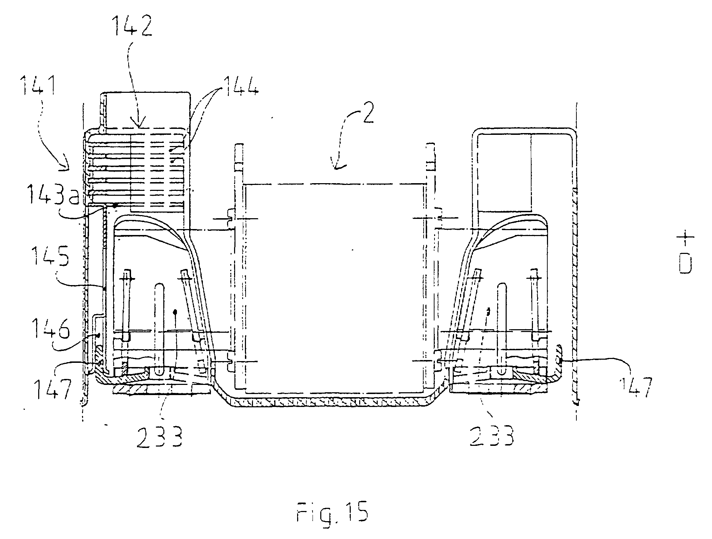

Die Löschblechschlitze 144a-e des Löschblechstapels 142 sind nach außen mit Isolierstoff verschlossen, die Löschblechanordnung 141 bildet also eine gekapselte Löschkammer, die nur in zwei Bereichen Öffnungen hat (Fig. 13 und 14) : Zum einen innen am schmalen Verbindungsschenkel des "U"; diese Öffnungen 148 erlauben den Eintritt des Lichtbogens in die Löschkammer. Zum anderen in den hiervon am weitesten abgewandten Enden des Löschblechstapels 142 - also außen an den Enden der Schenkel des "U"; diese Öffnungen 149 erlauben den Austritt (thermisch expandierten) Gases bzw. Plasmas aus der Löschkammer. Die Austrittsöffnungen 149 bilden zusammen an jedem Schenkel des "U" mehrere (hier drei) parallel zueinander und quer zu den Löschblechen 143 a-f verlaufende Austrittsschlitze.

Bei einer Ausschaltbewegung des Sicherungseinsatzes 2 bildet sich im Augenblick der Trennung des Kontaktmessers 31 von der Kontaktklemme 233 ein Lichtbogen aus. Dieser entsteht entweder zwischen Kontaktklemme 233 und Kontaktmesser 31 und wandert sofort von der Kontaktklemme 233 zu dem auf gleichem Potential liegenden ersten Löschblech 143a, oder er entsteht bereits von Anfang an nur zwischen dem ersten Löschblech 143a und dem Kontaktmesser 31. Er wird dann von einem im wesentlichen durch die Löschbleche 143a-f hervorgerufenen selbstinduzierten magnetischen Blasfeld in Richtung Löschblechstapel 142 ausgelenkt, wobei die von der Krümmung des Lichtbogens herrührende Feldinhomogenität einen zusätzlichen Beitrag zum selbstinduzierten magnetischen Blasfeld leistet. Er tritt dann in die Löschblechschlitze 144a-e ein. Die dort vom Lichtbogen bewirkte starke Aufheizung verursacht eine Expansion des dort befindlichen Gases, welches sich hauptsächlich in einer zu den Austrittsöffnungen 149 gerichteten Gasströmung durch diese Öffnungen entlädt. Diese Gasströmung führt den Lichtbogen in Richtung der Austrittsöffnungen 149 mit, drängt ihn also in die Tiefe der Löschblechschlitze 144a-e und unterstützt so das selbstinduzierte magnetische Blasfeld in seiner Wirkung. Aufgrund der so erzielten starken Kühlung wird der Lichtbogen innerhalb kürzester Zeit gelöscht.

Die beiden Kanäle 58 zur Belüftung der Sicherungseinsätze 2 durchziehen das Lastschaltgerät 1 im wesentlichen über dessen gesamte Länge in einer seitlichen Position innerhalb der Ritzel 16 und Zahnstangen 17, und zwar im wesentlichen gerade und ohne Verengungen des freien Kanalquerschnitts.

Dieser beträgt für beide Kühlkanäle 58 zusammen wenigstens 1/12, vorzugsweise wenigstens ein 1/10 und besonders vorzugsweise wenigstens 1/9 der Gesamtquerschnittsfläche (mit Schnittrichtung senkrecht zur Längsachse) des Lastschaltgeräts 1. Die Kanäle 58 öffnen sich jeweils in den Anschlußräumen 3 zu den Sicherungseinsätzen 2 hin und ermöglichen so die Abführung der von der Verlustwärme der Sicherungseinsätze 2 erwärmten Luft, bei im wesentlichen senkrechter Einbaulage durch Konvektion.

Unter den Kanälen 58 (d.h. zum Boden des Schaltgerätgehäuses 5 hin) ist außerdem jeweils ein Kanal 59 zur Belüftung der Leiterschienen 6 ausgebildet, die das Schaltgerät 1 ebenfalls im wesentlichen gerade und ohne Verengungen über seine gesamte Länge durchziehen. Der freie Querschnitt beider Kanäle 59 zusammen beträgt wenigstens ein 1/36, vorzugsweise wenigstens ein 1/30 und besonders vorzugsweise wenigstens ein 1/27 des Gesamtquerschnitts des Schaltgeräts 1. Die (ggf. durch Konvektion) in den Kanälen 59 bewegte Luft überstreicht einen Teil der Oberfläche der seitlichen Leiterschienen 6 und kühlt diese, was durch Wärmeleitung zur Kühlung der Sicherungseinsätze 2 beiträgt.

Das Schaltgerät 1 ist für verschiedene Sicherungsnormen geeignet. Hierzu müssen nur entsprechend angepaßt Sicherungshalter 9 verwendet werden. Entsprechend der Schweizer SEV-Norm ist beispielsweise für jedes Kontaktmesser 31 an der Halterplatte 27 ein Haken 50 mit einer Andruckfeder 51 angeordnet, zwischen die das Kontaktmesser 31 einschnappen kann (Fig. 18). Sicherungseinsätze 2 gemäß der deutschen DIN-Norm sind hingegen bereits mit einer T-förmigen Halte nase 52 ausgestattet, die durch ein Loch 53 in die Halter platte 27 einsetzbar ist und in einen engeren Teil des Lochs 53 verschiebbar ist, so daß sie durch Hinterschneiden der Halterplatte 27 gehalten werden (Fig. 19).

## Patentansprüche

1. Sicherungs-Lastschaltgerät und/oder -Trennschaltgerät, mit:
- einem Isolierstoffgehäuse (5),
- mehreren beweglichen Sicherungshaltern (9) zum Halten je eines Sicherungseinsatzes (2) und mehreren Anschlußräumen (3), die mit Kontaktmitteln (7) ausgerüstet sind, zur Aufnahme jeweils eines Sicherungseinsatzes (2), wobei eine elektrische Verbindung durch Einsetzen und Herausbewegen des Sicherungseinsatzes (2) in die/aus den Kontaktmittel/n (7) schaltbar ist,
- wenigstens einem Antriebs-Speicher mit einer oder mehreren Federn (126), der zumindest einen Teil der bei einer Ausschalt-Betätigung des Schaltgeräts (1) aufgebrachten Energie zunächst speichert und dann in einem Zug für die Auusschalt-Bewegung freigibt,
dadurch gekennzeichnet, daß
die Federn (126) als biegebeanspruchte Druckfedern ausgebildet sind, die in Stirnseiten der Anschlußräume (3) integriert sind.

2. Sicherungs-Lastschaltgerät und/oder -Trennschaltgerät nach Anspruch 1, gekennzeichnet durch
eine Anordnung (141) mehrerer Löschbleche (143) im Bereich des Kontaktmittels (7), wobei wenigstens das dem Kontaktmittel (7) nächstgelegene Löschblech (143a) eine lösbare elektrische Verbindung mit dem Potential des Kontaktmittels (7) aufweist, und wobei
die lösbare elektrische Verbindung unterbrochen wird, wenn der Sicherungseinsatz (2) in das Kontaktmittel (7) eingesetzt ist, und geschlossen wird, wenn der Sicherungseinsatz (2) aus dem Kontaktmittel (7) herausbewegt wird.

3. Sicherungs-Lastschaltgerät und/oder -Trennschaltgerät nach Anspruch 1 oder 2,
dadurch gekennzeichnet, daß
die Kontaktmittel (7) als Kontaktklemmen (133) mit gegenüberliegenden Klemmteilen (134) ausgebildet sind, derart, daß bei der Einführbewegung eines Kontaktstücks (31) des Sicherungseinsatzes (2) zumindest anfangs die Ströme in den gegenüberliegenden Klemmteilen (134) wenigstens teilweise in einander entgegengesetzten Richtungen fließen, um eine die Klemmteile (134) auseinanderdrückende Kraftkomponente zu erzeugen.

4. Sicherungs-Lastschaltgerät und/oder -Trennschaltgerät nach einem der Ansprüche 1 bis 3, gekennzeichnet durch ein Getriebe mit wenigstens einer Ritzel-Zahnstangen-Anordnung (15), deren Ritzel (16) mit einer von einer Bedienungsperson betätigbaren Einrichtung, insbesondere einem Bedienhebel (14) gekoppelt ist, mit der Zahnstange (17) kämmt und durch eine von der betätigbaren Einrichtung bewirkten Drehung gegenüber der Zahnstange (17) eine Parallelverschiebung des Sicherungseinsatzes (2) hervorruft, wobei
wenigstens eine weitere Ritzel-Zahnstangen-Anordnung (15) vorgesehen ist, welche von der ersten in der Längsrichtung des Schaltgeräts beabstandet ist, wobei die Ritzel (16) der beiden Ritzel-Zahnstangen-Anordnungen (15) gegenläufig miteinander sowie mit jeweils einer der Zahnstangen (17) kämmen.

5. Schaltgerät nach einem der Ansprüche 1 bis 4, bei welchem die Kontakttrennung bei mehreren oder allen Polen des Schaltgeräts zeitlich versetzt erfolgt.

## Claims

1. A fuse switch and/or fuse disconnector having:
- a housing (5) made of insulating material,
- several movable fuse-holders (9) each for holding a fuse link (2) and several connection chambers (3) equipped with contact means (7), each for housing one fuse link (2), wherein an electrical connection can be produced by inserting the fuse link (2) into/removing it from the contact means (7),
- at least one drive accumulator with one or more springs (126), which firstly accumulates at least a part of the energy applied during a turn-off operation of the switching device (1) and then releases it in a single operation for the turn-off movement,
**characterised in that** the springs (126) are constructed as flectionally stressed pressure springs, which are integrated in front sides of the connection chambers (3).

2. A fuse switch and/or fuse disconnector according to Claim 1,
**characterised by** an arrangement (141) of several quenching sheets (143) in the region of the contact means (7), wherein at least the quenching sheet (143a) situated closest to the contact means (7) comprises a disengageable electrical connection with the potential of the contact means (7), and wherein the disenageable electrical connection is interrupted when the fuse link (2) is inserted into the contact means (7), and is closed when the fuse link (2) is moved out of the contact means (7).

3. A fuse switch and/or fuse disconnecter according to Claim 1 or 2,
**characterised in that** the contact means (7) are constructed as contact clamps (133) with oppositely situated clamping parts (134) in such a manner that, during the insertion movement of a contact piece (31) of the fuse link (2), at least initially the currents in the oppositely situated clamping parts (134) flow at least partially in mutually opposed directions in order to generate a force component forcing the clamping parts (134) apart.

4. A fuse switch and/or fuse disconnector according to one of Claims 1 to 3,
**characterised by** a gearing with at least one rack-and-pinion arrangement (15), the pinion (16) of which is coupled with a device that can be actuated by an operator, in particular a operating lever (14), meshes with the rack (17) and by a rotation effected by the actuatable device in relation to the rack (17) brings about a parallel displacement of the fuse link (2), wherein
at least one further rack-and-pinion arrangement (15) is provided, which is spaced from the first in the longitudinal direction of the switching device, the pinion (16) of the two rack-and-pinion arrangements (16) meshing in opposite directions with one another and respectively with another of the racks (17).

5. A switching device according to one of Claims 1 to 4, in which the contact disconnection takes place in several or all poles of the switching device.

## Revendications

1. Appareil interrupteur de charge et/ou appareil sectionneur de fusibles, comportant:
- un logement de matériel d'isolation (5),
- plusiers supports de fusibles mobile (9) pour support un empiècement de fusibles (2) et plusiers espaces de raccordement (3) ayant des moyens de contact (7), pour l'incorporation de chaque fois un empiècement de fusibles (2), une connection éléctrique étant réglable pour bouger les empiècements de fusibles (2) en dedans et en dehors des moyens de contact (7),
- au moins une mémoire motrice comportant un ou plusiers ressorts (126), qui stocke ensuite au moins une partie de l'énergie produite lors d'une commande de l'appareil interrupteur de charge (1) et le libère ensuite d'un coups pour le mouvement d'interruption **caractérisé en ce que** les ressorts (126) étant exécutés comme des ressorts de pression (126) flexibles, étant intégrés dans les faces avant de l'espace de raccordement (3) .

2. Appareil interrupteur de charge et/ou appareil sectionneur de fusibles selon la revendication 1, **caracterisé par** un dispositif (141) de plusieurs tôles extinctrices (143), dans le secteur de moyens de contact (7), au moins la tôle extintrice (143a) voisine au moyen de contact (7) comprenant une connection électrique détachable ayant le potentiel du moyen de contact (7), et la connection électrique détachable soit interrompue lorsque l'empiècement de fusibles (2) est appliquée dans la pince de contact (7), et soit fermée lorsque l'empiècement de fusibles (2) est enlevé de la pince de contact (7).

3. Appareil interrupteur de charge et/ou appareil sectionneur de fusibles selon la revendication 1 ou 2, **charactérisé en ce que** les moyens de contact (7) soient exécutés comme des pinces de contact (133) ayant des parties de pinces opposées (134), de telle sorte que lors du mouvement d'introduction d'une partie de contact (31) de l'empiècement de fusibles (2) au moins au début les courants dans les parties de pince opposées (134) coulent au moins partiellement en directions opposées, afin d'éveiller un composant de force séparant les parties de pince (134).

4. Appareil interrupteur de charge et/ou appareil sectionneur de fusibles selon une des revendications 1 à 3, **caracterisé par** une transmission comportant au moins une disposition de tiges dentées de tympan (15), dont le tympan (16) est relié à un dispositif commandable par une personne, essentiellement une manivelle de commande (14), peigne avec la tige dentée (17) et provoque une déplacement parallèle de l'empiècement de fusibles (2) par une rotation par rapport à la tige dentée (17) provoquée par le dispositif actionné,
au moins un autre dispositif de tige dentée de tympan (15) étant prévu, qui se situe dans la direction longitudinale de l'appareil interrupteur de charge à une distance du premier, les tympans (16) des deux dispositifs de tiges dentées de tympan (15) peignant de façon opposée ainsi que chaque fois avec une des tiges dentées de tympan (17).

5. Appareil interrupteur selon une des revendications 1 à 4, la sectionneur de contact étant de plusiers ou toutes les pôles de l'appareil interrupteur sont réalisées à une façon décalée dans le temps.
